(19) **Europäisches Patentamt**

**European Patent Office**

**Office européen des brevets**

(11) **EP 0 925 863 B1**

(12) **EUROPEAN PATENT SPECIFICATION**

(45) Date of publication and mention
of the grant of the patent:
**24.11.2004 Bulletin 2004/48**

(51) Int Cl.⁷: **B23C 5/22**

(21) Application number: **98116958.4**

(22) Date of filing: **08.09.1998**

(54) **Throw-away tip, manufacturing method and throw-away type cutter**

Schneideinsatz, Herstellungsmethode und Fräser

Plaquette de coupe, méthode de production et fraise

(84) Designated Contracting States:
**CH DE FR GB IT LI**

(30) Priority: **16.12.1997 JP 34608897**

(43) Date of publication of application:
**30.06.1999 Bulletin 1999/26**

(73) Proprietor: **Daishowa Seiki Co., Ltd.**
**Higashiosaka-shi, Osaka 579-8013 (JP)**

(72) Inventor: **Kubo, Haruaki,**
**c/o DAISHOWA SEIKI CO., LTD.**
**Higashiosaka-shi, Osaka 579-8013 (JP)**

(74) Representative: **HOFFMANN - EITLE**
**Patent- und Rechtsanwälte**
**Arabellastrasse 4**
**81925 München (DE)**

(56) References cited:
**WO-A-97/10916**          **US-A- 5 513 931**
**US-A- 5 556 239**

**Description**

**BACKGROUND OF THE INVENTION**

**Field of the Invention**

The present invention relates to a throw-away tip forming an edge portion of a milling cutter, such as an end mill to be employed in machining work of a metal material or the like, a manufacturing method thereof, and a throw-away type cutter, to which the throw-away tip 1s loaded.

**Description of the Related Art**

US-A-5,513,931 discloses the features in the preamble of claim 1.

As a throw-away tip to be employed in a throw-away type cutter, there is a tip with a cutting surface having a substantially parallelogram shaped contour, in which a bolt receptacle hole extending from the cutting surface to a bottom surface on the opposite side, is formed, and two side edges of the cutting surface on the opposite sides form cutting edges.

US-A-5,556,239 discloses a square-contoured cutting tip, having cutting edges only in the corner portions thereof.

The throw-away tip 1s fixedly installed on a cutter body by setting in a recessed tip seat provided in the cutter body, threadingly engaging a mounting bolt into a threaded hole formed in a bottom of the tip seat through the bolt receptacle hole, to serve as an edge portion for cutting. When one of cutting edges of the tip 1s worn to an allowable limit or is damaged, the tip 1s re-installed with changing orientation over 180° so that the cutting edge on the other side may be used for cutting operation. Thus, it is a typical mounting condition of the throw-away tip to the cutter body to provide a positive axial rake angle as a cutting angle in an axial direction (leading edge side being projected frontwardly in feeding direction of the edge beyond trailing edge side.

Conventionally, the basic shape of the throw-away tip 1s substantially reversed truncated pyramid shaped configuration so that both side surfaces along the cutting edges form major flank (so-called secondary surface). In order to avoid interference with a work to be cut during cutting, the major flank is tapered to locate the cutting edge at front end and ascended rearwardly toward inside of the tip (toward center of the cutter upon installation). In the installed condition of the cutter, the major flank on one side arranged in inner side of the cutter body abuts on the side surface of the tip seat to serve as restricting surface for positioning and restricting the tip. An angle defined between a tangential line at the cutting position with respect to a circumference of the cutter and the major flank is referred to as a flank angle (so-called secondary angle). Greater flank angle makes wedge angle of the edge portion smaller to lower strength of the edge, correspondingly. Accordingly, in order to certainly provide sufficient strength for the edge by providing sufficiently large wedge angle, it becomes necessary to take some measure for making the flank angle small.

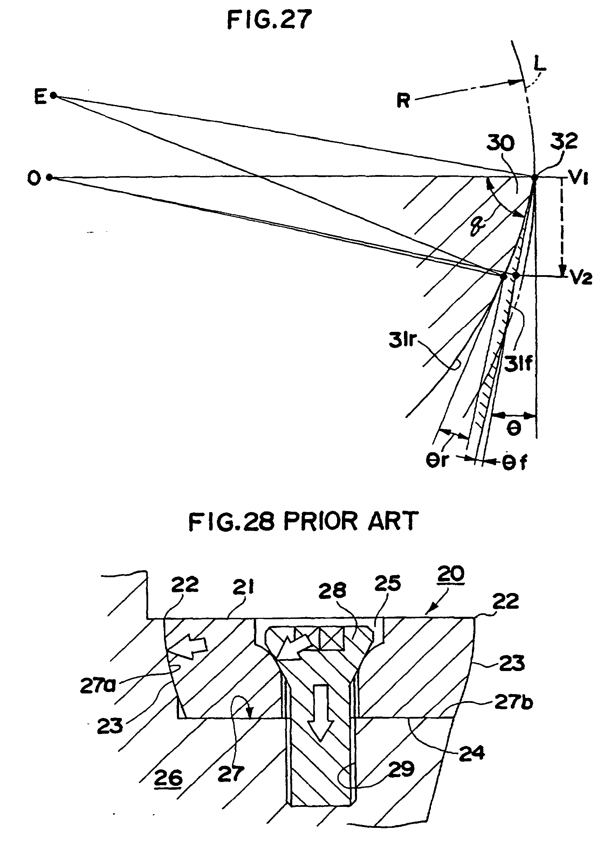

In case of a solid type end mill, in which the edge portion is integral with the cutter body, as shown in Fig. 27, a tip having a major flank 31r of the edge portion 30 in convex hemisphere shape taking a point E offset from an axial center O of the cutter (so-called eccentric R center) (so-called eccentric hemisphere second) has been practiced earlier. Currently, most of the tips are this type. In this type, in comparison with a flat flank surface (so-called straight secondary surface), a flank angle $\theta$ in the vicinity of a cutting edge 32 can be made small, a wedge angle q of the edge portion 30 can be made greater correspondingly to certainly obtain high strength of the edge. In the drawings, L shown by a phantom line is a trace of movement of the cutting edge 32 associating with cutting work and is an arc of radius R with taking an axial center O of the cutter as a center.

It should be appreciated that a reason why the flank angle $\theta$ in the flat flank surface cannot be set small, is as follow. For example, as shown as a flank surface 31f of Fig. 27, when the flank angle $\theta$ in the vicinity of the cutting edge 22 is set substantially equal to the arc-shaped flank surface 31r, in an initial stage where the cutting edge 30 is not worn, a gap avoiding interference with the material to be cut can be certainly maintained. The flank angle of the cutting edge 30 becomes smaller according to wearing. When wearing of the cutting edge 30 is progressed to a position $V_2$, the flank angle $\theta$r of the arc-shaped flank surface 31r becomes extremely small to make it difficult to maintain sufficient gap for avoiding interference. By further progress of wearing, the tip causes interference with the material to be cut, to make it impossible to continue cutting work.

Therefore, even in the throw-away tip to be employed in the throw-away type cutter, there is a proposal for set the flank angle smaller by forming the flank surface 23 in convex hemisphere shape as shown in Fig. 28 (Japanese Unexamined Patent Publication No. Showa 49-72794 (1974), Japanese Unexamined Patent Publication No. Showa 62-117003 (1987)). As shown, the throw-away tip 20 is formed flank surfaces 23, 23 along cutting edges 22, 22 on both side edges of the rake surface 21 into convex hemisphere shape, and a screw insertion hole 25 extending from the rake surface 21 to a bottom surface 24 is formed. The tip 1s rigidly fixed on the cutter body 26 by fitting into a recessed tip seat 27 constituted of a concave hemisphere side surface 27a and bottom surface provided in the cutter body 26 and threadingly engaging a mounting screw 28 into a threaded hole 29 in the bottom surface 27b of the tip seat 27 through the screw insertion hole 25.

In a milling cutter including the throw-away type cut, in addition to superior cutting ability, it has been required to achieve high strength and durability of the edge portion for use in high load cutting. In order to enhance cutting ability, it is desirable to set the foregoing axial rake angle as rake angle in the axial direction at large positive angle, and, in conjunction therewith, to set a radial rake angle as the rake angle in a radial direction, namely an angle of the rake surface with respect to a radial direction extending through the center of the cutter and the cutting edge of the tip at large positive angle (the rake surface forms a sweep-forward angle with respect to the radial direction). On the other hand, in order to enhance strength and durability of the cutting edge portion, in case of the throw-away type cutter, it becomes necessary to set a holding strength of the tip by the cutter body and stiffness on the side of the cutter body, to which the tip, large. On the other hand, concerning the flank angle, in view of cutting ability and strength of the cutting edge portion, it is preferred to uniformly set the overall cutting edge at a proper angular range (about 6 to 8°).

However, by employing the conventional throw-away type cutter, there is a restriction in degree of tilting of a bottom surface of the tip seat in an axial direction of the cutter in view of certainly providing rigidity of the cutter body in either case where the above-mentioned typical reversed truncated quadrangular pyramid shaped tip or a tip which is formed the flank surface into a convex hemispherical shape is employed. Therefore, an axial rake angle cannot be set at large positive angle. Furthermore, setting of the radial rake angle at the positive angle from a strengthened surface of a back metal portion, in which the tip seat is provided, is per se difficult. Particularly, when tip 1s installed with positioning the axis thereof at relatively high position in order to make a thickness of the back metal portion large, the radial rake angle becomes large negative angle.

It should be noted that by employing the tip with a tip breaker, it becomes possible to set the radial rake angle at positive angle in the high axis condition. However, in such case, an overhang of the tip from the cutter body becomes large and a wedge angle of the edge portion becomes small to significantly lower strength of the edge portion of the tip per se and thus to make it meaningless to provide higher rigidity on the side of the cutter body by positioning the axis of the cutter higher. Also, the flank angle can be greater than a proper angle to make it difficult to uniformly set the flank angle over the entire length of the edge.

Thus, in the conventional throw-away type cutter, in view of arrangement of the cutting edge, a resistance of cutting becomes large to cause difficulty in obtaining good cutting ability. Furthermore, both of the cutting ability and strength of the edge portion cannot be achieved. Also, holding strength of the tip by the cutter body becomes insufficient to cause a problem of low adaptability and durability in high load cutting.

WO-A-9710916 discloses a cutter which uses conventional throw-away type cutting tips.

## SUMMARY OF THE INVENTION

In view of the problems set forth above, the embodiments to be described below with reference to the accompanying drawings provide a throw-away tip which can set both of an axial rake angle and a radial rake angle at large positive anglesas installed on a cutter to certainly provide superior cutting ability, also can be set a strength of a cutting edge and fixing strength onto a cutter body high, and permits making a rigidity on the side of the cutter body in a condition maintaining superior cutting ability even when it is mounted on the cutter body in high axis position, and thus is superior in practical use.

The embodiments to be described also provide means for facilitating production of the throw-away tip set forth above.

The embodiments to be described further provide a throw-away type cutter which can achieve superior cutting ability and also achieves good adaptability and durability in high load cutting.

According to the present invention, there is provided a throw-away tip having a cutting surface of parallelogramic shape in plan view with side edges thereof forming cutting edges and a screw insertion hole extending from said cutting surface to a bottom surface on the opposite side of said cutting surface,

said cutting edges being tilted along their length so that a height from said bottom surface of said tip is greater at the side of a cutting edge corner portion than the height of the side of a base portion for forming a tilted surface descending from said cutting edge corner portion to a center portion,

characterized in that:

flank surfaces on side surfaces along said cutting edges are of a convex arc-shaped cross-section bulging outwardly from a line extended from a point on the cutting edge to a point in the plane found perpendicular to the bottom surface, at least at the cutting edge portion side of said cutting edge, and the flank surfaces being continuously and gradually more inclined from said perpendicular line toward an inside of said tip along the length of the cutting edges from the side of said cutting edge corner portion to the side of said base portion.

In a preferred construction, a contour line of the cutting edge may form a curved line moderately bulging in an extension direction of the flank surface from a straight line connecting the base portion side and the cutting edge corner portion side. The convex arc-shaped cross-section of the flank surfaces may be consisted of a peripheral surface of a cylinder having an axis intersecting with a tilted flat surface including the tilted surface in the cutting surface at an acute angle less than or equal to 45°, and the contours of the cutting edges form an elliptic arc as an intersection line between the peripheral surface of the cylinder and the tilted flat surface. The contour lines forming elliptic arcs of the cutting edges may be expressed by taking a mid point of the line ab connecting both ends thereof as a point m, the direction of the line ab as X-axis, a direction connecting the point m and the mid point n of the contour line as Y-axis, a length of the line ab is j, a radius of the cylinder $\Sigma$ forming the convex arc-shaped surface of the flank surface as k, a leg f the perpendicular line extended from the point m to the axis $\sigma$ of the cylinder $\Sigma$ as m', an angle formed by the perpendicular line mm' and the tilted flat surface S including the contour as $\phi$, and an intersection angle between the tilted flat surface S and the axis $\sigma$ of the cylinder $\Sigma$ as $\eta$, by the following expression:

$$[Y\cos\phi+\{k^2-(j^2\sin^2\eta/4)^{1/2}\}]^2+(X\sin\eta-Y\sin\phi\cos\eta)^2=k^2$$

A radius of the cylinder forming the convex arc-shaped surface in the flank surface may be greater than or equal to a radius of cutting of a cutter when the throw-away tip is installed.

Preferably, each flank surface may be constituted of the convex arc-shaped surface from the cutting edge side to the bottom side over its entire length. In the alternative, the flank surfaces may be constituted of first flank surfaces of the convex arc-shaped surface and located on the side of the cutting edge, and second flank surfaces located toward the bottom, adjacent to the first flank surface and stepped inwardly in relation to the first flank surfaces by way of a step. In the latter case, the flank surfaces may be further constituted of a third flank surface more inclined toward the base portion than the second flank surface, located adjacent to the bottom, and the first flank surface and the third flank surface may form a common convex arc-shaped surface. The steps between the first and second flank surfaces may have an indentation depth in a rang of 0.1 to 0.8 mm.

Also, the second flank surface may be a flat surface angled with respect to the bottom surface of the tip within an angular range of 90 to 101°.

A production method for the above throw-away tip comprises the steps of:

preparing a raw material of said tip by press forming and sintering a super hard material, in which both side surfaces take unfinished flat surfaces to serve as flank surfaces in a region to be formed into said convex arc-shaped surface; forming each flank surface with said convex arc-shaped surface by cylindrical grinding each side surface about an axis which intersects with a plane including said tilted surface on the cutting surface at an acute angle less than or equal to 45°.

Preferably, the raw material of the tip may be fixed on a rotary shaft, and each of the side surfaces is finished into the flank surfaces by cylindrical grinding by bringing a grinding tool into contact with the raw material of the tip from the side while rotating the rotary shaft.

Also described is a throw-away type cutter on which a throw-away tip as described above is fixed by means of a mounting screw,
    said throw-away tip being fixed on a tip seat provided in a cutter body with an axial rake angle $\alpha$ as a cutting angle in an axial direction and a radial rake angle $\beta$ as a cutting angle in a radial direction, both of said axial rake angle and said radial rake angle being positive angle, and said flank surface on the side of cutting being shifted, for keeping a flank angle $\theta$, about both ends of the contour line of said cutting edge on the cutting side, to an inside of a cutting circumferential periphery of which center is set on an axis O of the cutter body, away from a position on the cutting circumferential periphery.

In a preferred construction, use is made of a throw-away type cutter as set forth in claim 13, wherein use is made of the throw-away tip as defined in any one of claims 1 to 10, and the tip seat of said cutter body has a side surface including an upper side surface opposite to said first flank surface of the throw-away tip with an interval and a flat lower side surface tightly abutting said second flank surface of the throw-away tip.

## BRIEF DESCRIPTION OF THE DRAWINGS

The present invention will be understood more fully from the detailed description given herebelow and from the accompanying drawings of preferred embodiments which, however, should not be taken to limit the invention, but are for explanation and understanding only.

In the drawings:

Figs. 1A to 1C illustrate the first embodiment of a throw-away tip, in which Fig. 1A is a plan view, Fig. 1B is a side elevation and Fig. 1C is a front elevation;

Fig. 2 is a section taken along line II - II of Fig. 1A;

Figs. 3A to 3C are longitudinal section of the major part of the first embodiment of the throw-away tip in which Fig. 3A shows the section on a cutting edge side, Fig. 3B shows the section of an intermediate portion and Fig. 3C shows the section on a base side;

Figs. 4A and 4B show a tip end portion of a throw-away type cutter, to which the first embodiment of the throw-away tip 1s installed, in which Fig. 4A is a side elevation and Fig. 4B is a partially sectioned side elevation;

Fig. 5 is an illustration showing an arrangement condition of the throw-away tips in the throw-away type cutter as viewed from the side of the tip end face;

Fig. 6 is a cross-section of a tip mounting portion of the throw-away type cutter;

Figs. 7A to 7C illustrate the second embodiment of the throw-away tip, in which Fig. 7A is a plan view, Fig. 7B is a side elevation and Fig. 7C are front elevation;

Fig. 8 is a section taken along line VIII - VIII of Fig. 7A;

Figs. 9A to 9C are longitudinal section of the major part of the second embodiment of the throw-away tip 1n which Fig. 9A shows the section on a cutting edge side, Fig. 9B shows the section of an intermediate portion and Fig. 9C shows the section on a base side;

Figs. 10A and 10B show a tip end portion of a throw-away type cutter, to which the second embodiment of the throw-away tip 1s installed, in which Fig. 10A is a side elevation and Fig. 10B is a partially sectioned side elevation;

Fig. 11 is an illustration showing an arrangement condition of the throw-away tips in the throw-away type cutter as viewed from the side of the tip end face;

Fig. 12 is a cross-section of a tip mounting portion of the throw-away type cutter;

Figs. 13A to 13C are cross-sections of the throw-away type cutter employing a tip of a different shape, in which Fig. 13A is a mounting portion of a tip of a tilted flat surface over the entire flank surface, Fig. 13B is a mounting portion of the tip provided step in the flank surface, and Fig. 13C is a mounting portion of the tip of the steep tilted flat surface of the flank surface;

Fig. 14 is a general front elevation of the throw-away type cutter as viewed from the tip end side when the first embodiment of the tip 1s mounted in high axis position;

Fig. 15 is a general front elevation of the throw-away type cutter as viewed from the tip end side when the second embodiment of the tip 1s mounted in high axis position;

Fig. 16A and 16B show the throw-away type cutter, in which the conventional typical throw-away tip 1s mounted, in which Fig. 16A shows the case where the throw-away tip 1s mounted in high axis position, and Fig. 16B shows the case where the throw-away tip 1s mounted in low axis position;

Fig. 17 is a general plan view of the throw-away type cutter as viewed from the tip end side, in which the conventional throw-away tip 1nstalled a tip breaker is mounted in high axis position;

Fig. 18 is a perspective view of a raw material of the tip to be employed in the first embodiment of the throw-away tip;

Fig. 19 is a longitudinal section of the raw material of the tip;

Fig. 20 is a longitudinal section of the raw material of the tip to be used for the second embodiment of the throw-away tip;

Fig. 21 is a perspective view showing a positional relationship between a grinding cylinder and the tip upon finishing of cutting when a convex arc-shaped surface of the flank surface is formed by cylindrical grinding of the side surface of the raw material of the tip;

Fig. 22 is a diagrammatic illustration showing translation from an arrangement attitude in the cylindrical grinding of the throw-away tip to an arrangement attitude in installation of the cutter body;

Figs. 23A and 23B are for explanation of a method for determining the flank surface and contour line of the throw-away tip, in which Fig. 23A is a perspective view showing a relationship between a tilted flat surface including a contour line of the cutting edge of the throw-away tip 1n the cylindrical grinding, and Fig. 23B is an enlarged view of the major part of Fig. 23A;

Figs. 24A is an explanatory illustration showing a relationship between the tilted flat surface and the grinding cylinder as viewed from an x-axis direction;

Fig. 24B is an explanatory illustration showing displacement of the tilted flat surface and the flank surface by translation to the arrangement attitude of the throw-away tip as viewed in the x-axis direction;

Fig. 25 is an illustration showing by intuition a relationship between a distance between an y-axis and a center of the grinding cylinder, a radius of the grinding cylinder and a length of line ab, in a coordinate system with taking a line ab connecting both ends of the contour of the cutting edge in the throw-away tip;

Fig. 26 is an illustration as viewed from a side surface of the grinding cylinder for showing the foregoing relationship by intuition;

Fig. 27 is an explanatory illustration for comparing the case where the flank surface of the cutting edge in a solid type end mill is convex arc-shaped configuration and the case where the flank surface is flat; and

Fig. 28 is a cross section of the tip mounting portion of the conventionally proposed throw-away type cutter, in which the tip having the flank surface of the convex arc-shaped configuration is installed.

## DESCRIPTION OF THE PREFERRED EMBODIMENT

The present invention will be discussed hereinafter in detail with reference to the accompanying drawings. In the following description, numerous specific details are set forth in order to provide a thorough understanding of the present invention. It will be obvious, however, to those skilled in the art that the present invention may be practiced without these specific details. In other instance, well-known structures are not shown in detail in order to avoid unnecessarily obscure the present invention.

The first embodiment of a throw-away tip has a screw insertion hole 4 extending from a parallelogramic cutting or rake surface 2 to a bottom surface 3. Side edges of the cutting surface 2 form cutting edges 5. The cutting edge 5 is titled so that a height from a position of the bottom surface 3 of the tip on the side of the cutting edge portion 5a is higher than that on the side of the base portion 5b. On the cutting surface 3, a titled surface 2a of descending gradient from the cutting edge 5 to the center side of the tip 1 is formed. Flank surfaces 6 on the side of a side surface extending along the cutting edge 5 are bulged outwardly at least one the side of the cutting edge 5 from a perpendicular line p extended from a peak of the edge to a position on the bottom surface 3 of the tip, and are formed into convex arc-shaped surfaces continuous in a form gradually tiling toward inside of the tip from the foregoing perpendicular line p from the side of the cutting edge portion 5a to the side of the base portion 5b.

In the throw-away tip 1, each cutting edge 5 is ascendingly tilted toward the side of the cutting edge portion 5a. Also, the descending tilting surface 2a descending from the cutting tip 1 to the center side of the tip 1s provided. Since the cutting tip 1 per se has a positive axial rake angle and a radial rake angle, an axial rake angle $\alpha$ and a radial rake angle $\beta$ as mounted on the cutter body 10 can be set at large positive angles. On the other hand, since convex arc-shaped surface is formed at least on the side of the cutting edge 5 of the flank surface 6, a flank angle $\theta$ in a condition mounted on the cutter body 10 can be made small. Thus, a large wedge angle q of the cutting edge 5 can be certainly maintained. Thus, on the tip 1 during cutting by the cutter, a force to pushing an inner portion of the tip away from the tip seat 11 is exerted on the outer side cutting edge 5 during cutting as a reaction of the cutting load in a tangential direction. However, since the flank surface is formed into the convex arc-shaped configuration to make a distance $D_1$ between the upper side position of the flank surface 6 contacting with the tip seat 11 and the cutting edge 5 becomes shorter than a distance $D_2$ on the lower side position, the force pushing the tip away from the tip seat 11 is borne by the cutter body 10 at the contacting portion of a second flank surface 6b. Therefore, a self-holding force is provided for the tip 1 as mounted on the cutter body 10.

Also, the tip 1 is mounted in a back metal portion 10a of the cutter body 10 at high axis position, namely, even when a tip mounting position is set at high position in a radial direction r of the cutter body 10 parallel to the bottom surface 3 of the tip, the flank angle $\theta$ can be set a roper angular range (6 to 8°). Also, an overhang amount of the cutting edge 5 from the cutter body 10 can be restricted to be minimum. Thus, the convex arc-shaped surface of the flank surface 6 is gradually tilted inwardly of the tip from the cutting edge portion 5a side to the base portion 5b side. Therefore, the bottom surface 13 of the tip seat 11 of the cutter body 10 has the axial rake angle. Accordingly, while the tip 1s arranged at torsional position with respect to the cutter body 10, substantially equal flank angle $\theta$ can be set over the entire length from the cutting edge portion 5a to the base portion of the cutting edge 5.

In the first embodiment of the throw-away tip set forth above, the contour line of the cutting edge 5 forms a curve moderately bulging in a direction of extension of the flank surface 6 than the straight line ab connecting the cutting edge portion 5a side and the base portion 5b side. With this construction, substantially the same effect is achieved as the former construction.

In the first embodiment of the throw-away tip set forth above, the convex arc-shaped surface in the flank surface 6 is constructed with a peripheral surface of a cylinder $\Sigma$ having an axis $\sigma$ intersecting with the flat tilted surface S including the titled surface 2a in the cutting surface 2 at an acute angle less than or equal to 45°. In this case, upon production of the tip, the convex arc-shaped surface of the flank surface 6 can be easily formed by cylindrical grinding.

In the construction set forth above, the contour line forming elliptic arc of the cutting edge 5 may be expressed with taking a mid point of the line ab connecting both ends thereof as a point m, the direction of the line ab as X-axis, a direction connecting the point m and the mid point n of the contour line as Y-axis, a length of the line ab is j, a radius of the cylinder $\Sigma$ forming the convex arc-shaped surface of the flank surface 6 as k, a leg f the perpendicular line extended from the point m to the axis $\sigma$ of the cylinder $\Sigma$ as m', an angle formed by the perpendicular line mm' and the titled flat surface S including the contour as $\phi$, and an intersection angle between the titled flat surface S and the axis $\sigma$ of the cylinder $\Sigma$ as $\eta$, by the following expression:

$$[Y\cos \phi+\{k^2-(j^2\sin^2 \eta/4)^{1/2}\}]^2+(X\sin \eta-Y\sin \phi\cos \eta)^2=k^2$$

In this case, as can be clear from the analytical calculation which will be discussed later, a constant flank angle $\theta$ can be set over the entire length of the cutting edge 5 as installed on the cutter body 10. Furthermore, by establishing the elliptic arc as set forth above, a range of selection of the elliptic arc of the contour of the cutting edge 5 as producing the tip can be widened.

In the construction set forth above, in the throw-away tip 1, the radius k of the cylinder $\Sigma$ forming the convex arc-shaped surface in the flank surface 6 can be set to be equal to or greater than a radius R of cutting when the throw-away tip 1 is installed on the cutter body 10. In this case, since the curvature of the elliptic arc of the contour of the cutting edge 5 is set small, a difference of degree of projection in the radial direction of the cutter of the base portion 5b side and the cutting edge portion 5a side versus the center portion of the cutting edge 5 becomes small. In conjunction therewith, an overhang h of the overall tip 1 from the cutter body 10 becomes small.

In the construction of the throw-away tip set forth above, the flank surface 6 is formed into the convex arc-shaped surface over the entire length from the cutting edge 5 to the bottom portion. Therefore, the shape of the tip can be simplified.

Also, in the construction of the throw-away tip set forth above, the flank surface 6 is consisted of a first flank surface 6a on the side of the cutting edge 5 which is formed into the convex arc-shaped surface, and a flat second flank surface 6b located on the side of the bottom than the first flank surface 6a and at the stepped down position via a step 7 from the first flank surface 6a.

When the tip 1s mounted on the cutter body 10, by establishing contact of the flat surfaces with taking the flat second flank surface 6b as the contact surface with the tip seat 11, the position of the tip relative to the tip seat 11 can be restricted. Therefore, the tip can be stably fixed on the cutter body 10. Also, by the step 7, the gradient of the second flank surface 6b can be made smaller. Therefore, by setting the distance $D_1$ between the upper side of the second flank surface 6b and the cutting edge 5 shorter than the distance $D_2$ between the lower side of the second flank surface 6b and the cutting edge, greater self holding force can be obtained. In manufacturing of the tip 1, the raw material of the tip of the shape having a machining allowance at a portion to be the first flank surface 6a of the flank surface 6 by press. After sintering the raw material of the tip, the machining allowance is ground off by the grinding process to finish the first flank surface 6a of the convex arc-shaped configuration. Since the flat second flank surface 6b can be formed by press, grinding process can be performed with taking the second flank surface 6a as a reference of positioning in the tip width direction.

The throw-away tip constructed as set forth above as alternative construction, the flank surface 6 is consisted of the first flank surface 6a and the second flank surface 6b constructed as set forth above, and in addition, a third flank surface 6c located at further bottom side of the second flank surface 6b, and the first flank surface 6a and the third flank surface 6c forms a common convex arc-shaped surface. In this case, a boundary portion between the bottom surface 3 and the flank surface 6 is chamfered by the third flank surface 6c. Therefore, it becomes unnecessary to provide chamfer portion for avoiding interference with the edge portion of the tip at the corner portion 15 between the side surface 12 and the bottom surface 13 of the tip seat 11 of the cutter body 10. On the other hand, in a polishing process in the production of the tip 1t becomes possible to finish the first flank surface 6a and the third flank surface 6b into the convex arc-shaped surface by simultaneously grinding away the machining allowance.

On the other hand, in the preferred construction, the step 7 between the firs flank surface 6a and the second flank surface 6b has a height of 0.1 to 0.8 mm to achieve the foregoing effect certainly. Furthermore, by setting the height of the step 7 within the range set forth above, it becomes possible to avoid possibility that the overhang h of the cutting edge 5 from the cutter body becomes excessive.

In the further preferred construction, the second flank surface 6b in the throw-away tip 1 is formed into a flat surface forming an angle $\phi$ within a range of 90 to 101° with respect to the bottom surface of the tip 3. In this case, upon installation of the tip onto the cutter body 10, with taking the flat second flank surface 6b as the contact surface, the tip can be positioned and retained with respect to the tip seat 11 by establishing flat surface contact with the tip seat 11. Thus, the tip can be stably fixed on the cutter body 10. Also, excessive overhang of the cutting edge 5 from the cutter body 10 can be successfully avoided. Particularly, when the foregoing angle $\phi$ is set at the angle greater than 90°, contact with the tip seat 11 becomes a taper contact. Thus, by tightening of the mounting screw 8, the bottom surface 3 is contacted with the bottom surface portion 13 of the tip seat 3 under pressure to tightly or firmly fit the second flank surface 6b onto the side surface 12b of the tip seat 11 so that the tip can be rigidly fitted in further stably fixed condition.

On the other hand, in accordance with a production method the throw-away tip, a raw material 1a of the tip formed by press of a super hard material and sintering thereof, having tilted surfaces 2a on both sides in the cutting surface 2 and having both side surfaces 60 to be formed into the flank surface 6 as the convex arc-shaped surface forming regions. Each of the both side surfaces 60 to be formed into the flank surface of the raw material 1a of the tip 1s subject to cylindrical grinding taking the axis σ intersecting with the tilted surface S including the tilted surface 2a at the acute angle of less than or equal to 45°, as the center, the throw-away tip having the convex arc-shaped flank surface 6 set forth above can be obtained. In this case, the convex arc-shaped surface serving as the flank surface 6 can be formed by simple cylindrical grinding, namely by contacting the side surface 60 with the grinding tool from the side with rotating the tip, or by contacting the side surface with the side surface 60 with causing orbital motion of the grinding tool.

In the production method of the throw-away tip, cylindrical grinding is performed by fixing the raw material 1a of the tip on a rotary shaft, contacting the grinding tool from the side with rotating the rotary shaft to form each side surface 60 to be the flank surface 6 of the raw material 1a of the tip 1n this case, the raw material 1a of the tip 1s mounted on the rotary shaft substantially similar condition as mounting on the cutter body 10. Then, the convex arc-shaped flank surface 6 can be easily formed by simply contacting the grinding tool onto the side surface 60 from the side portion with rotating the rotary shaft.

Also, a throw-away type cutter may be constructed by fixing the throw-away tip set forth above by the mounting screw on the tip seat 11 formed in the cutter body 10. In such throw-away type cutter, the throw-away tip 1s provided both of the axial rake angle α as the cutting angle in the axial direction and the radial rake angle β as the cutting angle in the radial direction at positive angles. The flank surface 6 on the side to be ground is rotated from a condition where the flank angle θ along the cutting periphery L talking the axial center O of the cutter body 10 as a center is zero, in a direction to move the flank surface 6 away from the cutting periphery L with taking both ends of the contour of the cutting edge on the side to be ground as a fulcrum to certainly provide the flank angle θ.

In case of the throw-away cutter, since the tip 1 per se is provided positive axial rake angle and radial rake angle, the axial rake angle α and the radial rake angle β can be set at large positive angle to form at least the flank surface 6 on the side of the cutting edge 5 into convex arc-shaped configuration. Therefore, the flank angle θ can be small to certainly maintain the wedge angle q of the cutting edge sufficiently large. Also, by arrangement attitude of the tip, the flank angle θ becomes substantially uniform over the entire length of the cutting edge 5.

In the case of the throw-away type cutter as set forth above, the throw-away tip 1 constructed set forth above is employed. The side surface portion 12 of the tip seat 11 of the cutter body 10 is consisted of an upper side surface 12a opposing with a the first flank surface 6a with maintaining a gap therebetween and a flat lower side surface 12b tightly abutting with the second flank surface 6b. In this throw-away type cutter, the side surface portion 12 of the tip seat 11 established with flat surface contact wit the second flank surface 6b of the tip 1. In addition, since a reactive force to the load during cutting is borne on the side of the cutter body 10, the tip 1 can be can be stably and firmly fixed to achieve superior durability withstanding for high load cutting process and high cutting precision.

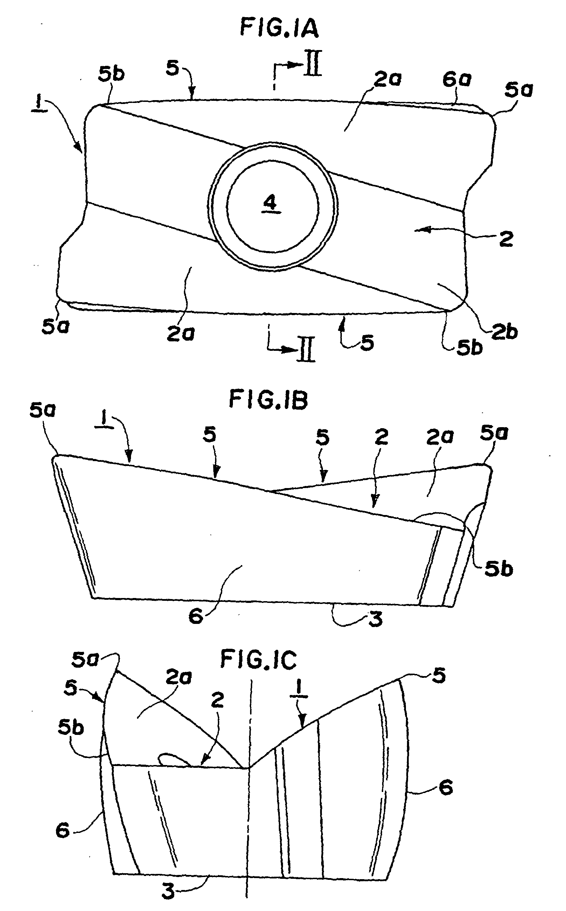

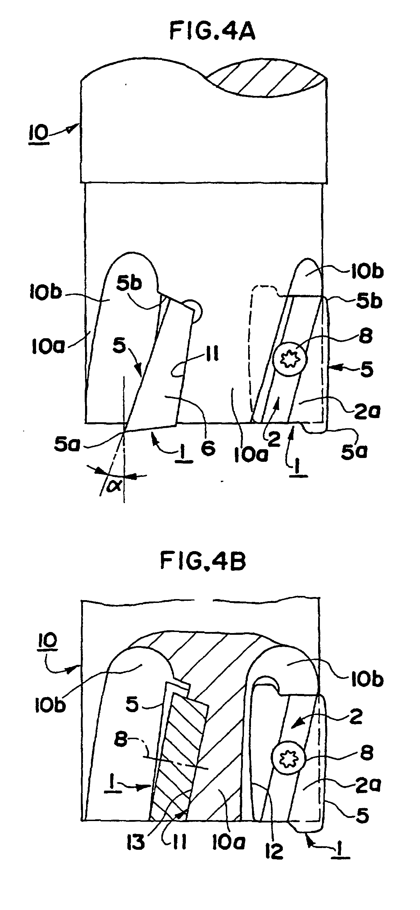

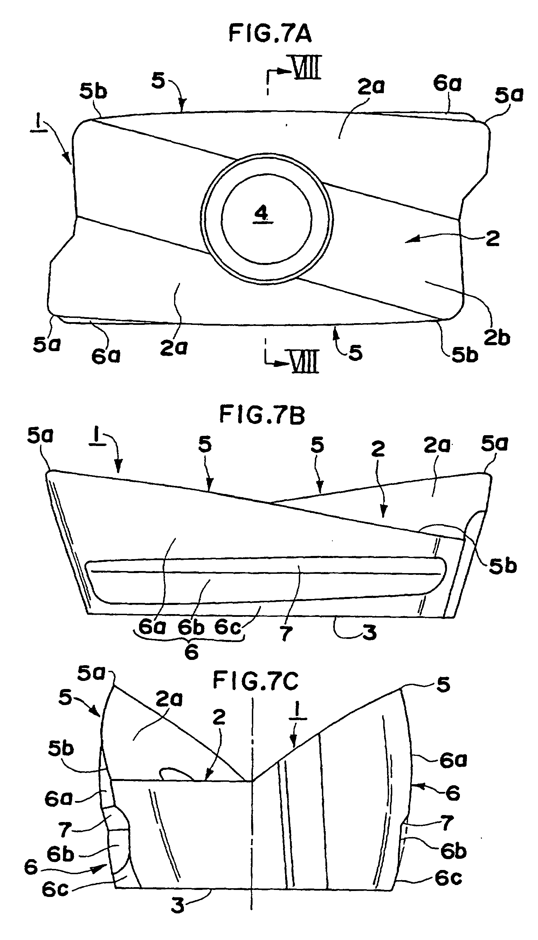

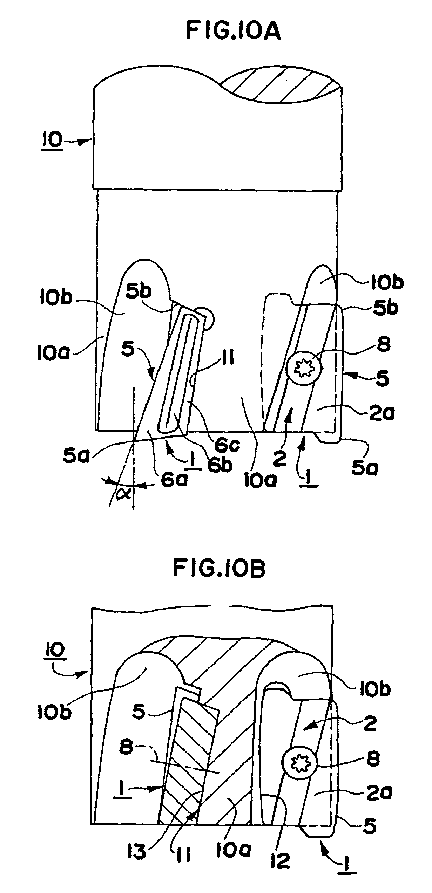

Hereinafter, particular embodiments will be discussed with reference to the drawings. In the drawings, Fig. 1A to Fig. 3C show the first embodiment of the throw-away tip, Fig. 4A to Fig. 6 show the throw-away type cutter, in which the firs embodiment of the tip is installed, Fig. 7A to Fig. 9C show the second embodiment of the throw-away tip, and Fig. 10A to Fig. 12 show the throw-away type cutter employing the second embodiment of the tip.

The first embodiment of the throw-away tip 1 shown in Figs. 1A to 3C forms cutting edges 5 on both of the curved longitudinal side edges of a cutting or rake surface 2 formed into substantially parallelogramic shape in plan view and has a screw insertion hole 4 extending from the center portion of the cutting surface 2 to the bottom surface 3 on the opposite side. Then, each cutting edge 5 is tilted so that the height from the position of the bottom surface 3 of the tip on the side of the cutting edge 5a is higher than that on the side of the base portion 5b. On the other hand, on the cutting surface 2, the tilted surfaces 2a descending from the cutting edges 5 on both sides to the center side of the tip are formed. The center portion 2a of the cutting surface 2 is formed into flat. It should be noted that the tilted surfaces 2a may be formed into slightly curved surface other than the flat surface, as a matter of course. Thus, the tip 1 is used as the cutting edge of the cutter per one side of the cutting edges 5 by turning over 180°. For this purpose, overall tip 1 is formed symmetric about the center line of the screw insertion hole as the axis of symmetry. By this, the cutting edge portions 5a and the base portions 5b of both cutting edges 5 are arranged in diagonal direction. It should be noted that the screw insertion hole 4 is constituted of a large diameter upper portion 4a, an intermediate portion 4b of reduced diameter with a peripheral surface of curved convex shape, and a small diameter lower portion 4c.

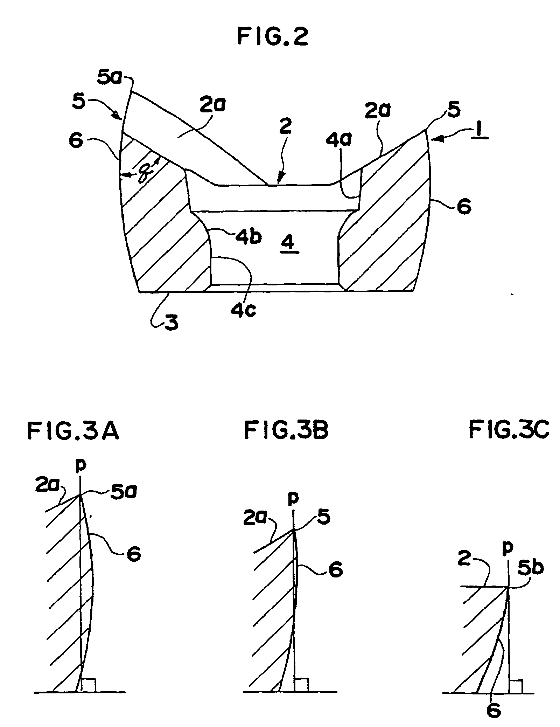

The flank surfaces 6 on both sides as side surfaces along respective cutting edges 5 are formed into the convex arc-shaped surface extending from the cutting edges 5 to the bottom portion. The convex arc-shaped surface are shown in Figs. 3A to 3C, in which Fig. 3A shows the section of the cutting edge portion 5a, Fig. 3B shows the section of the intermediate portion and Fig. 3C shows the section of the base portion 5b. On the side of the cutting edge portion 5a of the cutting edge 5, the convex arc-shaped surface is bulged outwardly from the perpendicular line p extended from the peak of the edge to the bottom of the tip and is continuous in a form tilted toward inside of the tip from the perpendicular line p. On the other hand, the tilted surface 2a of the cutting surface 2 is set to increase the width from the base portion 5b of the cutting edge 5 to the cutting edge portion 5a. Over the entire length of the cutting edge 5, substantially equal wedge angle q (see Fig. 2) is provided.

The contour line of the cutting edge 5 becomes an intersecting line between the flank surface 6 of the convex arc-shaped surface and the tilted surface 2a as a plane surface of the cutting surface 2, which is a curved line moderately bulging toward a direction of extension of the flank surface 6 from the straight line ab connecting the side of the cutting edge portion 5a and the side of the base portion 5b. Thus, the curved line of the cutting edge 5 becomes an elliptic arc shape by forming the convex arc-shaped surface in the flank surface 6 with a cylindrical peripheral surface having an axis intersecting with the planar surface including the tilted angle 2a in the cutting surface 2 at acute angle less than or equal to 45°, by the tip production method which will be discussed later.

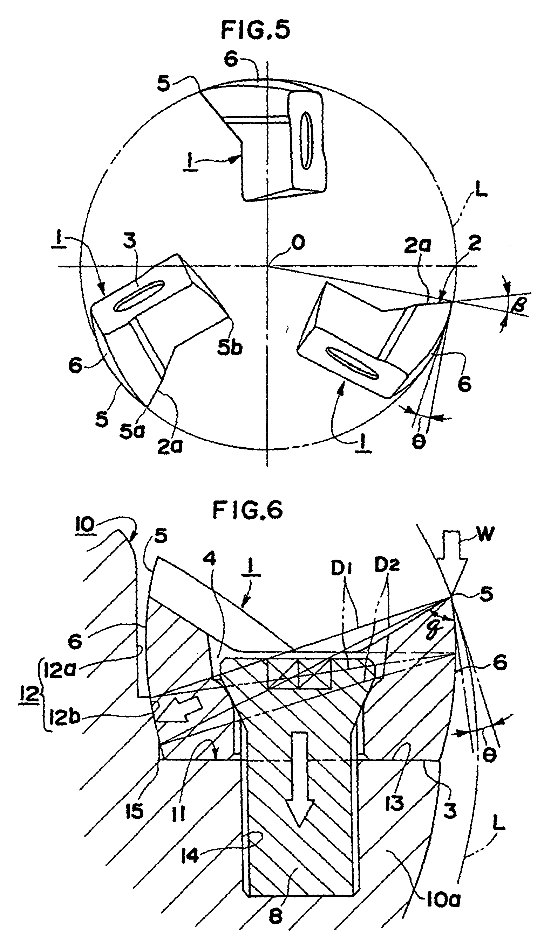

As shown in Figs. 4 and 5, the throw-away type cutter 10 installed with the first embodiment of the throw-away type 1 is formed with back metal portions 10a arranged radially in three directions with a phase difference of 120° about the axial center portion O by providing cut-out portions 10b at circumferential three portions on the tip end side. On the inner surface of each back metal 10a, pocket form tip seats 11 are defined by the side surface portions 12 and the bottom surface portions 13. Then, in each tip seat 11, the throw-away tip 1 is fixed by means of the mounting screw 8 in a position slightly projecting the cutting edge 5 on one side outwardly from the outer periphery of the cutter body 10.

Each tip seat 11 has the bottom surface tilted with respect to the axial direction of the cutter body 10 so as to provide the axial rake angle for the tip. Since the tip 1 per se is formed into a shape having the axial rake angle by the cutting edge 5 tilted to be higher on the side of the cutting edge portion 5a, the axial rake angle $\alpha$ of the cutting edge 5 in the condition mounted in the cutter body 10 is large positive angle as shown in Fig. 4A. On the other hand, as shown in Fig. 5, since the tip 1 has descending gradient from the cutting edge 5 toward the center of the cutting surface, the radial rake angle $\beta$ is also large positive angle. Thus, the flank surface 6 of the tip bulges outwardly on the side of the cutting edge portion 5a of the cutting edge 5 to form the convex arc-shaped to be gradually tilted toward inside of the tip to the side of the base portion 5b. Therefore, the flank angle $\theta$ is held substantially constant appropriate small angle (6 to 8°) over the entire length from the side of the cutting edge portion 5a to the base portion 5b.

As shown in detail in Fig. 6, the throw-away tip 1 in the throw-away type cutter is fixed on the cutter body 10 by tightening the mounting screw 8 into the threaded hole 14 formed in the bottom surface 13 of the tip seat 11 through the screw insertion hole 4. However, the side surface portion of the tip seat 11 is in two-step form. The upper side surface 12a is placed away with respect to the upper side of the flank surface 6 of the tip 1. Also, the lower side surface 12b is formed into concave arc-shaped configuration for tightly fitted with the lower portion of the flank surface 6. The corner portion 15 between the side surface portion 12 and the bottom surface portion 13 is formed into a cut-away portion for avoiding interference with the edge portion of the tip 1.

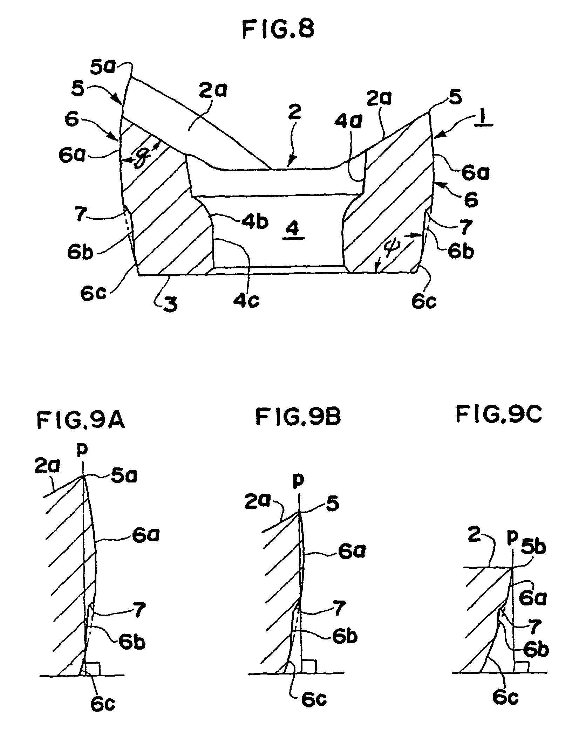

The second embodiment of the throw-away tip 1 shown in Figs. 7A to 9C is similar to the first embodiment of the tip 1 except for the flank surfaces 6 on both sides. The common portions with the first embodiment will be represented by the same reference numerals and the detailed description thereof will be neglected in order to keep the disclosure simple enough by avoiding redundant discussion for facilitating clear understanding of the present invention. The flank surface 6 of the tip is constituted of a first flank surface 6a formed into convex arc-shape on the side of the cutting edge 5, a flat second flank surface 6b stepped down from the first flank surface 6a via the step 7, and a third flank surface 6c located at a position further inclined toward the bottom side than the second flank surface 6b. The first flank surface 6a and the third flank surface 6c form a common convex arc-shaped surface as connected by a phantom line shown in the outside of the second flank surface in Fig. 7C and Fig. 8.

Here, the first flank surface 6a is bulged outwardly from the perpendicular line p extended from the peak of the edge to the position of the bottom of the tip on the side of the cutting edge portion 5a of the cutting edge 5, as shown in Figs. 9A to 9C, in which Fig. 9A shows the section on the side of the cutting edge portion 5a, Fig. 5B shows the section on the intermediate portion and Fig. 5C shows the section on the side of the base portion 5b and is formed into the convex arc-shape continuous to gradually tilt toward inside of the tip from the perpendicular line p extended from the side of the cutting edge portion 5a to the side of the base portion 5b. Accordingly, in the second embodiment of the tip 1, the curved line of the cutting edge 5 becomes elliptic arc-shape by forming the convex arc-shaped surface in the flank surface with the cylindrical peripheral surface having the axis intersecting with the tilted flat surface including the tilted surface 2a in the cutting surface 2 at an acute angle less than or equal to 45° by the following tip production method.

However, height difference between the lower edge of the first flank surface 6a and the upper edge of the second flank surface 6b by the step 7, is preferably set within a range of 0.1 to 0.8 mm. On the other hand, the angle $\phi$ (see Fig. 8) between the second flank surface 6b and the bottom surface 3 of the tip is preferred to be in a range of 90 to 101°. When the angle $\phi$ is excessively large, upon installation on the cutter body 10, the overhang of the cutting edge 5 from the cutter body 10 becomes large to cause difficulty in achieving self-holding force of the tip to lower strength of the cutting edge. Similarly to the first embodiment, by setting the shape of the tilted surface 2a of the cutting surface to be gradually widened from the side of the base portion 5b of the cutting edge 5 to the side of the cutting edge portion 5a, the substantially the same wedge angle q (see Fig. 8) is provided over the entire length of the cutting edge 5.

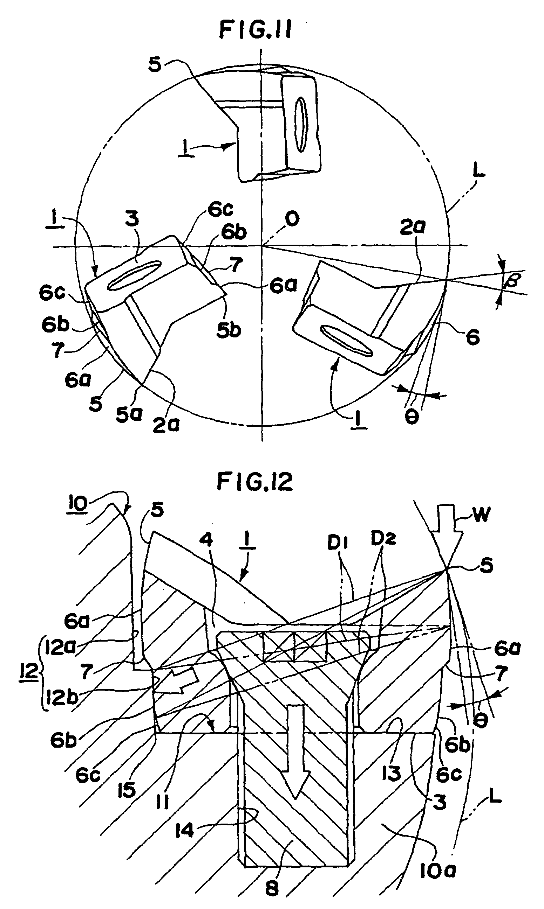

As shown in Figs. 10A, 10B and 11, the throw-away type cutter installed with the foregoing second embodiment of the throw-away tip 1 is, similarly to the cutter installed with the first embodiment of the tip, has back metal portions 10a arranged radially in three directions by forming the cut-outs 10b at three circumferential positions on the tip end side. On each tip seat 11 provided on the inner surface of each back metal portion 10a, the throw-away tip 1 is fixed by means of the mounting screw 8 in a condition where the one of the cutting edges 5 is slightly bulged from the outer periphery of the cutter body 10.

The bottom surface 13 of each tip seat 11 is tilted with respect to the axial direction of the cutter body 10 for providing the axial rake angle. Since the tip per se has the axial rake angle by the cutting edge 5 tilted to be higher on the side of the cutting edge 5a, the axial rake angle $\alpha$ of the cutting edge 5 in the condition mounted in the cutter body 10 is large positive angle as shown in Fig. 10A. On the other hand, as shown in Fig. 11, since the tip 1 has descending gradient from the cutting edge 5 toward the center of the cutting surface, the radial rake angle $\beta$ is also large positive angle. Thus, the first flank surface 6a of the tip 1 bulges outwardly on the side of the cutting edge portion 5a of the cutting edge 5 to form the convex arc-shaped to be gradually tilted toward inside of the tip to the side of the base portion 5b. Therefore, the flank angle $\theta$ is held substantially constant appropriate small angle (6 to 8°) over the entire length from the side of the cutting edge portion 5a to the base portion 5b.

As shown in detail in Fig. 12, the throw-away tip 1 is fixed on the cutter body 10 by tightening the mounting screw 8 into the threaded hole 14 formed in the bottom surface 13 of the tip seat 11 through the screw insertion hole 4. However, the side surface portion of the tip seat 11 is in two-step form. The upper side surface 12a is placed away with respect to the upper side of the flank surface 6 of the tip 1. Also, the lower side surface 12b is tightly fitted with the lower portion of the flank surface 6. In the corner portion 15 between the side surface portion 12 and the bottom surface portion 13, a gap is formed between the third flank surface 6c.

As set forth above, in the throw-away type cutter installed the first or second embodiment of the throw-away tip can provide the axial rake angle $\alpha$ and the radial rake angle $\beta$ at large positive angle to make cutting resistance small to achieve superior cutting ability. Also, since the flank surface 6 of the tip 1 is formed into the convex arc-shaped surface on the side of the cutting edge portion 5a (overall flank surface 6 in the first embodiment and the first flank surface 6a in the second embodiment), the flank angle $\theta$ can be maintained within the proper small angular range of 6 to 8° even when wearing of the cutting edge 5 is progressed to continue stable cutting. Furthermore, since the wedge angle q of the cutting edge 5 is large to achieve superior strength of the cutting edge, high durability of the cutting edge can be achieved. On the other hand, even when breakage of one of the cutting edges 5 is caused during cutting or deposition is caused, the breakage or deposition will be hardly propagated to the lower side of the flank surface (second flank surface 6b of the tip of the second embodiment). Therefore, when the tip 1 is install on the tip seat 11 with reversal over 180° in order to use the cutting edge 5 on the other side, positioning of the tip in the lower side surface portion 12b of the tip seat 11 will never be obstructed.

On the other hand, during cutting by means of these cutter, the cutting edge 5 is hanged over outwardly beyond the cutter body 10. Thus, by the cutting load to be exerted on the cutting edge 5 (as shown by arrow W of Fig. 6 and Fig. 12), a force to lift away the tip from the tip seat 11 as reaction, namely a force to rotate the tip 1 about the cutting edge 5 on the cutting side in a releasing direction, will act. However, as shown in Figs. 6 and 12, since the distance $D_1$ between the upper side of the flank surface 6 contacting with the lower side surface 12b of the tip seat 11 (second flank surface 6b in the tip of the second embodiment) is shorter than the distance $D_2$ between the lower side of the flank surface and the cutting edge, the force to lift the tip 1 away from the tip seat is borne by the cutter body 10 at the contact portion between the lower side surface 12b of the tip seat 11 and the tip. Accordingly, the tip 1 may have self-holding force to hardly exert the reactive force to the mounting screw 8 to achieve quite high durability for the cutting load. In Figs. 6 and 12, the distances $D_1$ and $D_2$ shown by the phantom lines represent the same distance at the position of the cutting edge portion 5b.

As set forth above, the distances $D_1$ and $D_2$ between the cutting edge 5 on the side of cutting in the throw-away tip 1 and upper and lower positions of the contact portion with respect to the side surface portion 12 of the tip seat 11 becomes $D_1 < D_2$. Since convex arc-shaped surface of the flank surface 6 is bulged outwardly in the lower portion than the peak of the cutting edge on the side of the cutting edge portion 5a of the cutting edge 5 (the first flank surface 6a of the second embodiment to achieve large self-holding force on the tip 1. Particularly, in case of the second embodiment of the tip 1, the step 7 is provided between the first flank surface 6a and the second flank surface 6b to make it possible to reduce the gradient of the second flank surface 6b in surface contact with the surface of the tip seat 11. Thus a difference between the distances $D_1$ and $D_2$ can be set large.

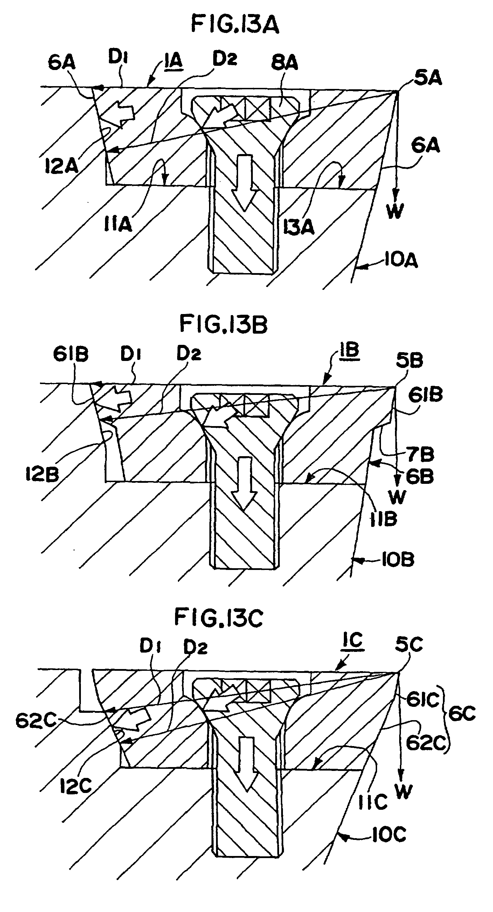

In contrast to this, as shown in Fig. 13A, for example, in the conventional typical throw-away tip A having a flat titled flank surface 6A over the entire length, taper contact can be established between the flank surface 6A and the side surface 12 of the tip seat 11A upon mounting the cutting edge 5 on the cutting side with the cutter body 10. Since the distances $D_1$ and $D_2$ between the upper and lower positions of the contact portion and the cutting edge portion 5A on the cutting side becomes $D_1 > D_2$, no self-holding force can be provided. Therefore, a reactive force of the cutting load is exerted on the mounting screw 8A to degrade fixing strength of the tip to withstand in high load cutting. On the other hand, when breakage of the cutting edge 6 and deposition is caused during cutting, no obstruction is caused in positioning and restricting the cutting edge 5 through reversal over 180°, fluctuation of the cutting edge position and unstability of the mounting condition can be caused. It should be noted that in the shape of the tip, since the overall flank surface 6A is flat, large flank angle θ has to be provided.

On the other hand, even when the step 7B is provided in the flank surface 6B as the throw-away tip 1B sown in Fig. 13B to contact the tilted flat surface on the side of the cutting edge portion 5B with the side surface portion 12B of the tip seat 11B in the cutter body 10B to position and restrict in order to take a measure for the problem of the flank angle θ, a relationship of the distances between the upper and lower positions of the contact portions of the restricting surface and the cutting edge portion 5B on the side of cutting becomes $D_1 > D_2$ to cause no self-holding force to degrade fixing strength of the tip to withstand in high load cutting. Furthermore, since the breakage n the cutting edge portion 5B may propagate to the position to the step 7B to make it impossible to position and restrict the tip once breakage is caused to use the tip in the reversed position. On the other hand, due to deposition to the titled flat surface portion 61B, fluctuation of the cutting edge position upon using with reversal and unstability of the mounting position can be caused.

Also, when the positioning the restricting surface is formed by forming the flank surface 6C of the throw-away tip 1C with a moderately tilted portion 61C on the side of the cutting edge portion 5C and a steep tilted portion 62C on the side of the bottom portion, is established by contacting the steep tilted position 62C on the bottom side onto the side surface portion 12C of the tip seat 11C in the cutter body 10, no problem will be caused in positioning and restricting upon reversal due to breakage of the cutting edge portion 5C and deposition. However, a relationship of the distances between the upper and lower positions of the contact portions of the restricting surface and the cutting edge portion 5B on the side of cutting becomes $D_1 > D_2$ to cause no self-holding force to degrade fixing strength of the tip to withstand in high load cutting, similar to the former case. Furthermore, difficulty may be caused for adoption for special cutting edge shape.

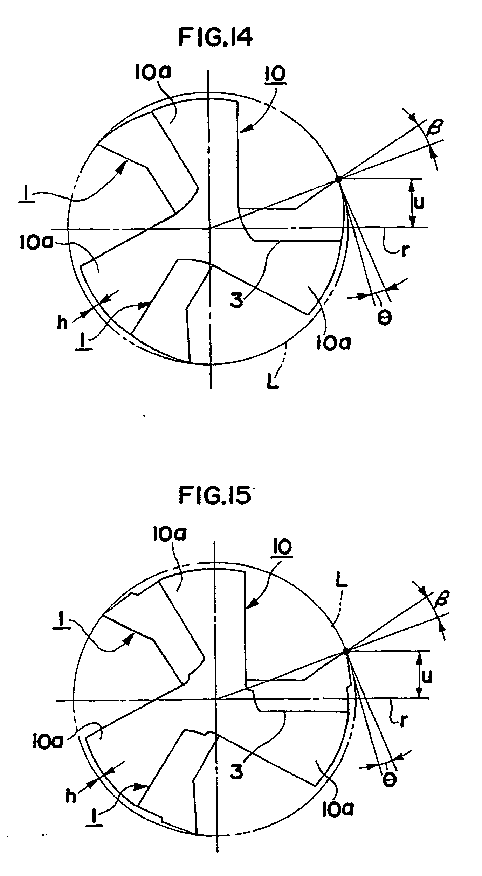

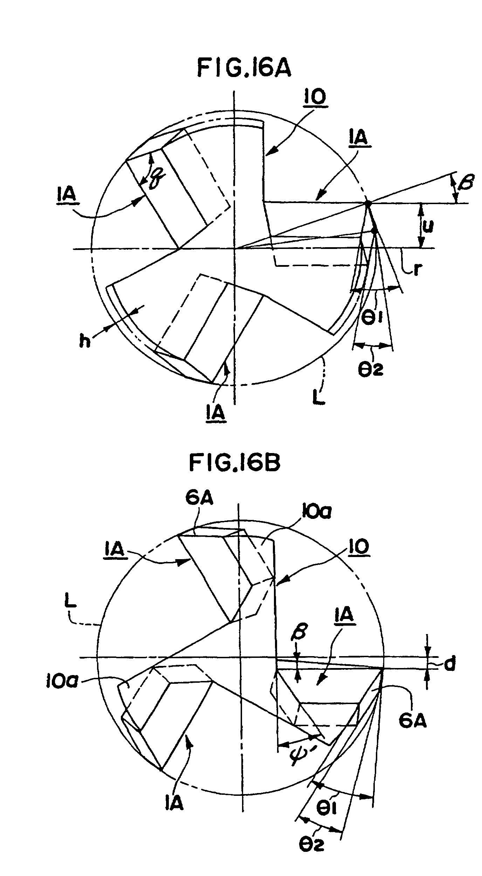

On the other hand, in the throw-away cutter 10, in order to provide large positive angle of the radial rake angle β with maintaining the wedge angle q of the cutting edge portion large in the existing shape of the tip 1, the cutting edge is mounted with locating the axis of the cutting edge at high position. As shown in Fig. 14 (installing the tip of the first embodiment) and in Fig. 15 (installing the tip of the second embodiment), a height u of the cutting edge 5 with taking a radial direction r parallel to the bottom surface of the tip 1 of the cutter body 10 is set high and the flank angle θ is set at a proper angular range (6 to 8°), the rigidity of the cutter body 10 can be increased by increasing the thickness of the back metal portion 10a and the diameter of the radial center portion. Furthermore, the overhang of the tip can be restricted minimum.

In case of the existing normal tip 1A having the flat tilted surface of the flank surface 6A, the wedge angle q per se can be large. When the tip 1 is set at high axis position as shown in Fig. 16A, if the flank angle $\theta_2$ on the base portion side is certainly provided (frequently greater than or equal to 10°), and the flank angle $\theta_1$ on the cutting edge side becomes extremely large (possibly exceed 20°). Furthermore, overhang h becomes large to lower strength of the edge portion. In addition, since the radial rake angle β becomes large negative angle to significantly increase the cutting resistance, increasing of rigidity of the cutter body 10 by installing the tip at high axis position becomes meaningless. Conversely, when the tip is installed on the cutter body at low axis position d as shown in Fig. 16B, while positive radial rake angle can be provided for lowering cutting resistance, it becomes necessary to set the gradient φ of the flank surface 6A f the tip large in order to certainly provide the flank angle $\theta_2$ on the base portion side. By this, seating stability of the tip on the cutter body 10A is lowered. Also, due to low axis position, the back metal portion inherently becomes thinner to lower rigidity of the cutter body 10.

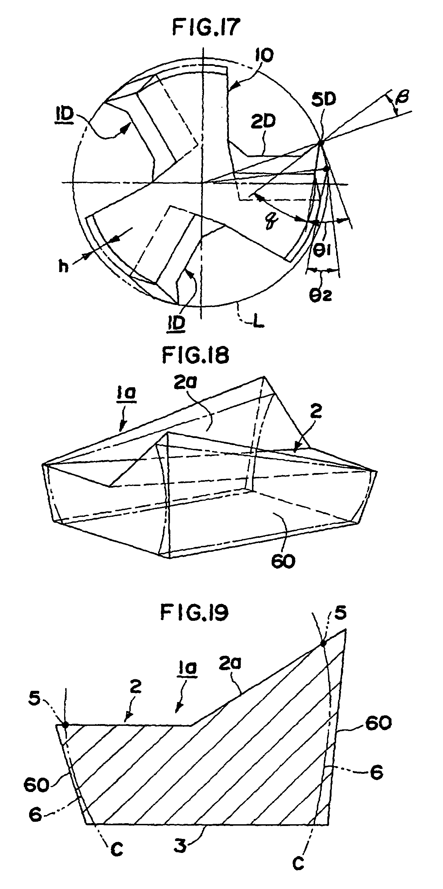

On the other hand, by providing the tip breaker (a shape where both sides along the cutting edge 5D of the cutting surface 2D are risen) as a tip 1D shown in Fig. 17, to set the radial rake angle β at the high axis position at positive angle, if the flank angle $\theta_2$ on the base portion side is certainly provided (frequently greater than or equal to 10°), and the flank angle $\theta_1$ on the cutting edge side becomes extremely large (possibly exceed 20°). Furthermore, overhang h becomes large to lower strength of the edge portion. Also, since the wedge angle q of the cutting edge portion becomes small to extremely weaken the strength of the cutting edge portion to cancel effect of increasing of rigidity of the cutter body 10 by high axis position.

The features of the present throw-away type cutters are summarized as follows.

a) Both of the axial rake angle α and the radial rake angle β of the cutting edge portion can be set at large positive angle.
b) The flank angle θ of the cutting edge portion and be uniformly set from the cutting edge portion side to the base portion side at small angular range (about 6 to 8°).
c) Sufficient wedge angle q of the cutting edge portion can be certainly provided.
d) The overhang h of the tip can be restricted to be necessary minimum amount.
e) The rigidity on the side of the cutting body 10 can be increased by setting at high axis.
f) The holding strength of the tip on the cutter body 10 can be large.
g) No obstruction may be caused in exchanging the cutting edges 5 on both sides of the tip 1.

By these features, the throw-away type cutter 10 has small cutting resistance, small magnitude in vibration or so forth in cutting, to achieve smooth cut, to exhibit high adaptability of the strength of the cutting edge for high load cutting and to achieve superior durability for long life, and thus can provide quite high total performance.

In case of the throw-away type cutter installed with the second embodiment of the tip 1, the flat second flank surface 6b of the tip 1 is taken as a restricting surface to establish surface contact with the lower side surface of the tip seat 11 to establish stable mounting condition without causing fear of play or so forth during cutting. Particularly, when an angle $\phi$ between the second flank surface 6b and the bottom surface 3 at an obtuse angle greater than 90°, the mounting screw 8 is threadingly tightened into the thread hole 14 of the tip seat 11 upon mounting, strong taper contact between the second flank surface 6b and the lower side surface 12b of the tip seat 11 can be contacted under pressure, quite firm fixing condition can be established.

In production of the throw-away tip 1, normally, a raw material 1a of the tip is prepared by press molding of a powder state cemented material under heating condition to have tilted surfaces 2a on both sides of the cutting surface 2 and a machining allowance in a portion to be the flank surface 6. After sintering the press molded raw material, the flank surface 6 is formed into the convex arc-shaped surface by grinding process.

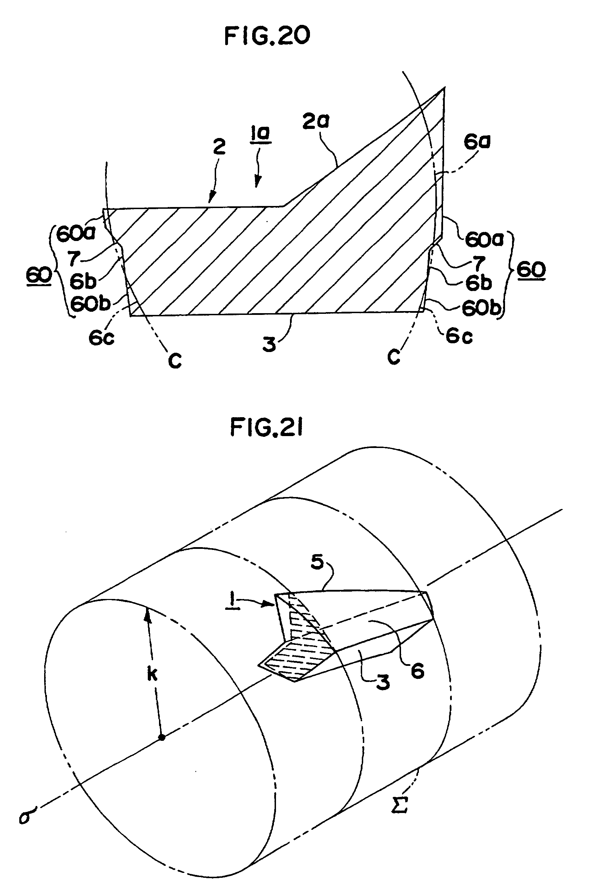

Namely, as the raw material of the first embodiment of the tip, as shown in Figs. 18 and 19, a raw material 1a of the tip, in which entire length of both side surfaces 60 to be the flank surface 6 is formed into flat surface, is employed. On the other hand, as the raw material of the second embodiment of the tip, as shown in Fig. 20, the raw material 1a of the tip having both side surfaces 60 of stepped two level form consisted of a planar surface 60a providing the machining allowance in a region corresponding to the first flank surface 6a, and a planar surface 60b providing the machining allowance in the third flank surface in a form where the flat second flank surface 6b is extended to the bottom surface 3. After sintering of this, both side surfaces 60 of the raw material 1a of the tip is ground in arc-shape up to the cut line C shown by the phantom line of Figs. 19 and 20. The second flank surface 6b in the second embodiment of the tip 1 is formed in a region of the planar surface 6b left as non-ground portion. It should be noted that while the raw material 1a of the tip is illustrated in the simplified form for facilitating understanding of the difference before and after machining in Fig. 18, concave-convex shape on both side surfaces adjacent the threaded hole 4 and the side surfaces 60 in the tip 1, rounded shape of the corner portion and the contour portion are formed in the stage of press molding.

In the grinding process, for forming that the convex arc-shaped surface of the flank surface 6 is bulged outwardly from the perpendicular line p extending from the peak f the edge to the position of the bottom surface 3 of the tip on the side of the cutting edge portion 5a of the cutting edge 5, as set forth above, and continuous in a form gradually tilted toward inside of the tip from the perpendicular line p from the side of the cutting edge portion 5a to the side of the base portion 5b, it is only required to perform cylindrical grinding about the axis to intersect each of both side surfaces 60 with the tilted flat surface including the tilted surface 2a on the side of the side surface 60 at an acute angle less than or equal to 45°. The intersecting angle of the tilted flat surface and the axis corresponds to the axial rake angle $\alpha$ upon installation to the cutter body 10. In case of the tip formed by cylindrical grinding in the condition where the intersecting angle exceeds 45°, the cutting edge is mounted on the cutter body in an excessively tilted form to make the cutting width short in the direction of the cutter axis to make the side of the cutting edge portion 5a of the cutting edge thinner to easily cause breakage.

As cutting processing means, it has been encouraged a method that the raw material 1a of the tip is mounted on a rotary shaft to be a supporting base body in an arrangement substantially similar to a condition of installation of the cutter body 10, and, with rotating the rotary shaft, a cutting tool, such as a bite or o forth is contacted from the side portion for form the convex arc-shaped flank surface 6 by cutting one of the side surface 60, and by mounting the raw material 1a of the tip on the rotary shaft in the position reversed over 180°, the other side surface 60 is cut in similar manner to form the flank surface 6. In this case, as the rotary shaft to be the supporting base body, substantially the similar structure as the cutter body is employed. The tip is mounted on the tip seat by means of the mounting screw 8, the raw material 1a of the tip is fixed on the rotary shaft in a condition where the one of the side surface 60 of the entire length is extended outwardly beyond the machining allowance from the outer periphery of the rotary shaft.

Fig. 21 shows a relationship of arrangement of the grinding cylinder $\Sigma$ upon termination of grinding and the tip 1 in cylindrical grinding. It should be noted that, in order to facilitate understanding, the first embodiment of the tip 1 is illustrated in a further simplified form. In the drawing, the hatching of the broken line shows a section of the tip along the diametrical direction f the grinding cylinder $\Sigma$. The reference sign k represents a radius of the grinding cylinder $\Sigma$ and $\sigma$ shows the axis of the grinding cylinder $\Sigma$.

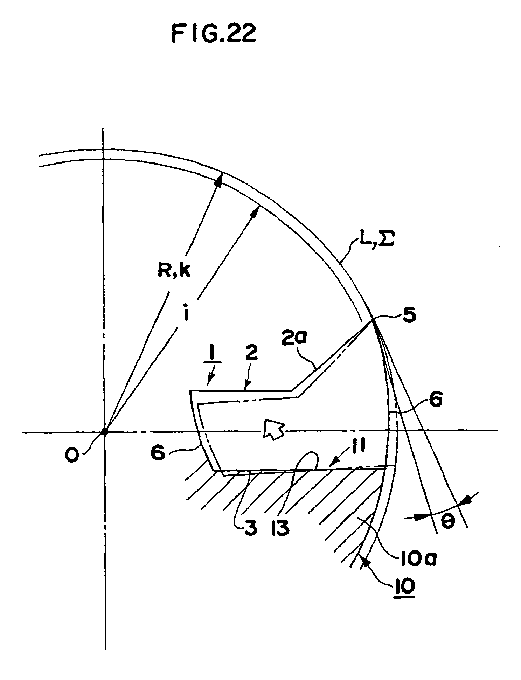

The throw-away tip 1 obtained by forming the flank surfaces 6 by grinding process, in the condition installed on the cutter body 10, is pivoted from a condition where the flank surface 6 on the cutting side extending along the grinding cylinder L centered at the axis O of the cutter body 10 t have no flank angle $\theta$ to move the flank surface 6 away from the grinding cylinder L with taking both ends of the contour of the cutting edge 5 on the cutting side as fulcrums to certainly provide the flank angle $\theta$. For example, as shown in Fig. 22, when the radius k of the grinding cylinder $\Sigma$ in the grinding process and the grinding radius R in the cutter are set equal to each other, in the arrangement the same as that of the grinding process as shown by the phantom line, the flank surface 6 contacts with the grinding cylinder L (flank angle θ = 0°) to make grinding impossible. By pivoting the tip 1 about the position of the cutting edge 5 from this condition in the direction of arrow to move the flank surface 6 away from the grinding cylinder L to place at an attitude shown by solid line, the flank angle θ is certainly provided.

In other words, the cutter body 10 having the tip seat 11 to be placed in the arrangement condition shown by solid line in Fig. 22 may be employed. Therefore, the tip seat 11 is desired to be a size and shape where the end edge of the bottom surface 3 of the flank surface 6 of the tip 1 installed in the foregoing arrangement condition and the outer end edge of the back metal portion 10a are consistent. It should be noted that, in the drawing, the reference sign i is a radius of the cutter body 10 (back metal portion 10a).

While the radius k of the grinding cylinder Σ in the grinding process is not necessary to set to be equal to the cutting radius R in the cutter, the flank angle θ is certainly provided in a form translated the attitude similarly to the foregoing even when k ≠ R. For example, in case of k < R, the condition the flank surface 6 of the tip 1 extends along the cutting circumferential periphery L of the cutter body 10 represents the state where the small circle of the grinding cylinder Σ internally contacts with the large circle of the cutting circumferential periphery L, in which the flank surface 6 is placed away from the cutting circumferential periphery L at greater magnitude at closer position to the bottom surface 3. However, since the flank angle θ is zero to tightly contact in the vicinity of the cutting edge 5 to be placed in a condition impossible to grind, in this arrangement, only by placing the tip in the attitude pivoted about both ends of the cutting edge 5 as fulcrum, the flank angle θ is certainly provided.

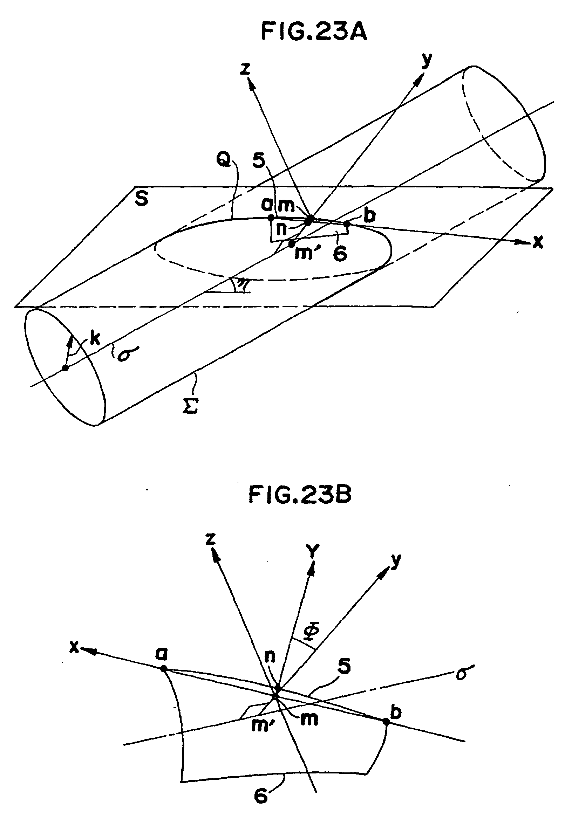

Fig. 23A shows a relationship between the tilted flat surface S and the grinding cylinder Σ forming the flank surface 6 with taking the tilted flat surface including the tilted surface 2a in the cutting surface of the tip 1 being the tilted flat surface S. Fig. 23B is an enlarged illustration of the portion of the flank surface 6 on one side of the tip 1 in Fig. 23A. As illustrated, in case of the tip 1 formed with the flank surface 6 formed by the grinding process, the intersection between the tilted flat surface S and the peripheral surface of the grinding cylinder Σ becomes elliptic. Therefore, the contour of the cutting edge 5 becomes elliptic arc-shape. Hereinafter, a method for deriving the expression of the curve of the contour will be discussed.

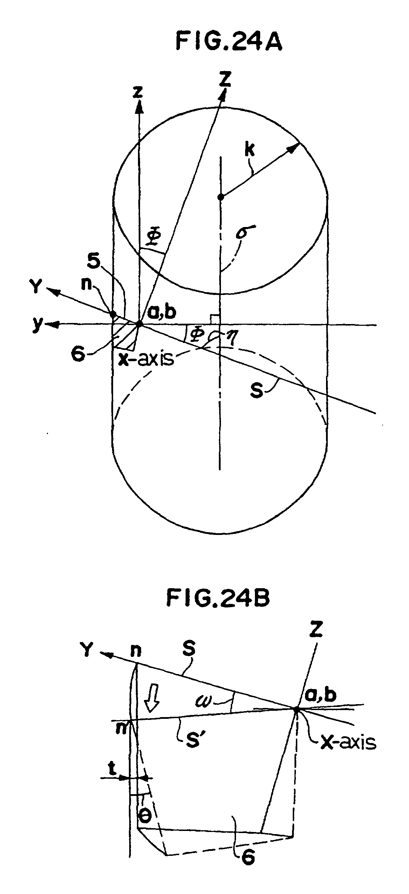

In Figs. 23A and 23B, it is taken that both ends of the contour line of the cutting edge 5 are a and b (the end on the side of the cutting edge portion 5a is taken is a and the end on the side of the base portion 5b is taken as b), a direction of a line ab connecting the points a and b by straight line is x-axis, a mid point of the line ab is an origin m, an intermediate point of the contour line is point n, a leg of the perpendicular line extended downwardly from the axis σ of the grinding cylinder Σ from the point m is m', a direction of the perpendicular line mm' is y-axis, a direction perpendicularly intersecting with the x-axis and y-axis through the point m is z-axis, an angle formed by the y-axis (perpendicular line mm') and the tilted flat surface S is $\phi$, an intersection angle between the tilted flat surface S and the axis σ of the grinding cylinder Σ is η. The contour line of the cutting edge 5 is projected in the direction of the y-axis beyond the line ab. Fig. 24A is a projected view of the flank surface 6a on the plane perpendicular to the line ab. Since the direction of line ab corresponds to x-axis, a projected surface becomes yz plane.

Here, assuming that a distance between the point m on the line ab and the axis σ of the grinding cylinder Σ is d, the axis σ of the grinding cylinder Σ perpendicularly intersects with the y axis across y = -d, forms angle η with the x-axis, and forms angle (90° - η) with the z-axis. On the other hand, the coordinate of the leg m' of the perpendicular line extended from the point m down to the axis σ of the grinding cylinder Σ is (0, -d, 0). Then, the axis σ of the grinding cylinder Σ is expressed by:

$$y + d = 0 \quad \text{and} \quad x \sin \eta + z \cos \eta = 0 \tag{1}$$

An expression of the cylinder Σ as set of points of the distance k (radius) from the axis σ is:

$$(y + d)^2 + (x \sin \eta + z \cos \eta)^2 = k^2 \tag{2}$$

A plane including the line ab and the point m' is the xy plane.

Assuming that the length of the line ab is j, the coordinate of the point a is (+j/2, 0, 0) and the coordinate of the point b is (-j/2, 0, 0). Both of the points a and b are located on the plane of the grinding cylinder Σ, and y = 0 and z = 0, x at the points a and b is expressed from the foregoing expression (2):

$$x = \pm(k^2 - d^2)^{1/2} / \sin \eta \tag{3}$$

Namely, the following relationship is established between the length j of the line ab and d

$$j = 2(k^2 - d^2)^{1/2} /\sin \eta \qquad (4)$$

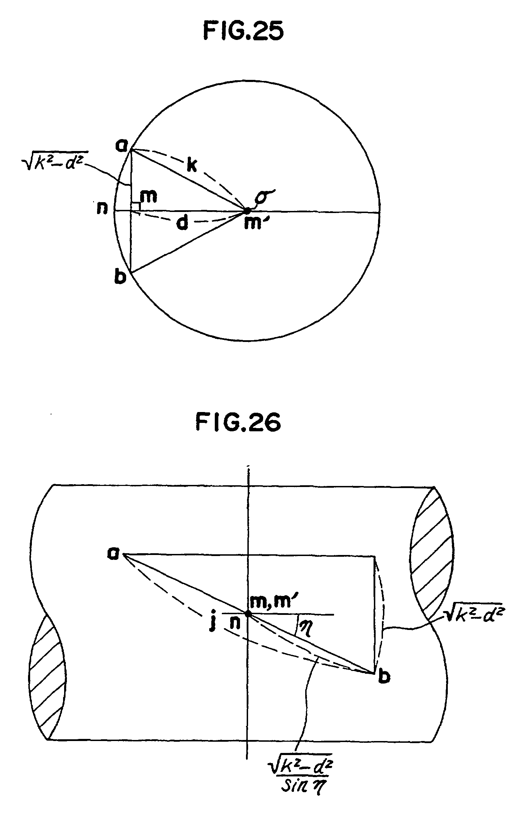

The foregoing relationship is shown by intuition n Figs. 25 and 26 The contour line of the cutting edge 5 is the intersection line of the tilted flat surface S titled at an angle $\phi$ from the y-axis about the line ab and the grinding cylinder $\Sigma$, the expression of the tilted flat surface S is:

$$y \sin \phi + z \cos \phi = 0 \qquad (5)$$

The expression of the contour line of the cutting edge 5, namely the intersection line of the tilted flat surface S and the grinding cylinder $\Sigma$ is obtained by solving the simultaneous expression (2) and (5). Since solving this simultaneous expression is difficult, coordinate conversion (x, y, z → X, Y, Z) so that the tilted flat surface S lies on the xy plane. Fig. 24 shows coordinate conversion.

$$y = Y \cos \phi + Z \sin \phi \qquad (6)$$

$$z = - Y \sin \phi + Z \cos \phi \qquad (7)$$

$$x = X \qquad (8)$$

The tilted surface S is Z = 0 namely on XY plane.
The grinding cylinder $\Sigma$ is expressed by the following equation:

$$(Y\cos\phi + Z\sin\phi + d)^2 + (X\sin\eta - Y\sin\phi \cos\eta + Z\cos\phi \cos\eta)^2 = k2 \qquad (9)$$

Since the contour line presents on the XY plane, and thus Z = 0. By replacing the foregoing equation (9) with this, the following equation can be established:

$$(Y\cos\phi + Z\sin\phi + d)^2 + (X\sin\eta - Y\sin\phi \cos\eta) 2 = k^2 \qquad (10)$$

The foregoing equation (10) provides strict expression of the contour including the curve (ellipse). This means that Y is not even function of X and is not simple curve of the second order. Re-writing d with the length j of the line ab, the contour of the cutting edge 5 is expressed as follow:

$$[Y\cos\phi + \{k^2 - (j^2 \sin^2\eta/4)\}^{1/2}]^2 + (X\sin\eta - Y\sin\phi \cos\phi)^2 = k^2 \qquad (11)$$

Here, the tilted flat surface S can be rotated about the line ab as the axis of rotation and the angle $\phi$ formed by the tilted flat surface S and the y-axis is variable. Namely, the axial rake angle of the cutting edge 5 in the grinding cylinder $\Sigma$ is the intersection angle $\eta$ between the line ab and the axis $\sigma$ of the grinding cylinder $\Sigma$ and is invariable even if the angle $\phi$ is varied. Namely, the angle $\phi$ is a parameter independent of the axial rake angle and can be remained as free parameter even when the axial rake angle is determined. This means that upon production of the tip, the range of selection of the elliptic arc of the contour line of the cutting edge becomes wide and leads to the advantageous point to be adapted to the difference of the use condition of the cutter.
Next, re-ordering the foregoing equation (11) as a order of power of Y, the following equation can be established:

$$(\cos^2\phi + \sin^2\phi \cos^2\eta)Y^2 + 2(d\cos \phi - X\sin\eta \cos\eta \sin\phi)Y$$

$$+ (d^2 - X^2 \sin^2 \eta) = 0 \tag{12}$$

Solving the foregoing equation (12), the following equation is established.

$$Y = \frac{-d \cos \Phi - X \sin \eta \cos \eta \sin \Phi) = \{(d \cos \Phi - X \sin \eta \cos \eta \sin \Phi)^2 - (\cos^2 \Phi \sin^2 \Phi \cos^2 \eta)(d^2 - k^2 + X^2 \sin^2 \eta)\}^{1/2}}{(\cos^2 \Phi + \sin^2 \Phi \cos^2 \eta)}$$

(13)

In the foregoing equation, there can be seen + and - signs. The contour of the cutting edge 5 is a branch of the plus sign. Since the third term of the foregoing equation (13) is smaller in comparison with the first and second terms, the foregoing equation (13) is approximated as follow:

$$Y = \frac{K^2 - d^2 - X^2 \sin^2 \eta)}{2(d \cos \Phi - X \sin \eta \cos \eta \sin \Phi)} \tag{14}$$

This is the equation expressing the contour line. Since X is the coordinate taken on the line ab, the foregoing equation expresses the shape over the entire length of the contour line. On the length j of the line ab and the deviation d, there is a relationship as expressed by the foregoing equation (4). Therefore, it can be expressed as follow:

$$Y = \frac{\sin^2 \eta \left( \dfrac{j^2}{4} - X^2 \right)}{2 \left\{ \left( k^2 - \dfrac{j \sin \eta}{4} \right)^{1/2} \cos \Phi - X \sin \eta \cos \eta \sin \Phi \right\}} \tag{15}$$

Next, a curve radius at an arbitrary point on the contour line of the cutting edge is calculated. At first, since the foregoing equation (15) contains the first order term of X in the denominator, it can be appreciated that the contour line is asymmetric with respect to a point n. Assuming $\phi = 0$, asymmetry postulate disappears. In other words, asymmetry postulate should be remained as long as $\phi$ is not zero. At points a and b, since $X = \pm j/2 = \pm (k^2 - d^2)^{1/2} / \sin \eta$ is established, $Y = 0$. The first stage differentiation becomes

$$\frac{- \sin \eta \{\cos \eta \sin \Phi (k^2 - d^2) + 2dX \sin \eta \cos \Phi + X^2 \sin^2 \eta \cos \eta \sin \Phi\}}{2(d \cos \Phi - X \sin \eta \cos \eta \sin \Phi)^2} \tag{16}$$

The second stage differentiation becomes

$$\frac{-\sin^2 \eta \{d^2 \cos^2 \Phi + (k^2 - d^2) \cos^2 \eta \sin^2 \Phi + 2dX \sin \eta \cos \eta \sin \Phi \cos \Phi}{(d \cos \Phi - X \sin \eta \cos \eta \sin \Phi)^2} \tag{17}$$

Accordingly, the curve radius can be expressed by:

$$\frac{[4(d \cos \Phi - X \sin \eta \cos \eta \sin \Phi)^4 + \sin^2 \eta \{\cos \eta \sin \Phi (k^2 - d^2) + 2dX \sin \eta \cos \Phi + X^2 \sin^2 \eta \cos \eta \sin \Phi\}^2]^{3/2}}{\sin^2 \eta (d^2 \cos^2 \Phi + (k^2 - d^2) \cos^2 \eta \sin^2 \Phi + 2dX \sin \eta \cos \eta \sin \Phi \cos \Phi) (d \cos \Phi - X \sin \eta \cos \eta \sin \Phi)^3}$$

(18)

Here, the tip formed with the flank surface 6 through grinding process by means of the grinding cylinder Σ having a radius k is fixed in the attitude pivoted about both ends of the cutting edge 5 serving as fulcrum, namely about the line ab from the arrangement condition in the grinding cylinder Σ upon effecting the grinding process for forming the flank surface 6, over an angle ω. In this case, the flank angle θ is expressed by θ(X)=ω cos η at any points on the contour line. Therefore, by setting the angle ω to pivot the tip at a value dividing the flank angle θ by cos η (ω = θ/cos η), the flank angle θ at any point on the contour line becomes preferred angle. For example, assuming that the preferred flank angle θ is 6°, and the intersecting angle is 20°, the flank angle θ cannot be uniform over the entire length of the cutting edge 5 by setting ω = 6.38°. This is the superior effect of grinding of the convex arc-shaped surface in the flank surface 6 by grinding.

It should be noted that the equation of the contour line of the cutting edge expressed by the foregoing expression (11) and the curve radius expressed by the foregoing expression (18) can be established on any point of the ellipse Q, on which the contour line forms an intersection line between the tilted flat plane S and the grinding cylinder Σ. However, since the actual contour line of the cutting edge 5 forms a curve moderately bulging in the direction of extension of the flank surface 6 beyond the line ab connecting the cutting edge portion 5a and the base portion 5b, the elliptic arc at the position where the center portion of the contour line conversely form concave shape, is inappropriate. On the other hand, in the elliptic arc in the vicinity of the longer axis in the ellipse Q, the contour line of the cutting edge 5 is inclined in the cutting direction to make the axial rake angle to be extremely large to cause the same problem as that the intersection angle between the axis σ of the grinding cylinder Σ and the tilted flat surface S exceeds 45°.

On the other hand, since the tip is fixed at the attitude pivoted inwardly from the arrangement position in the grinding cylinder Σ upon machining the convex arc-shaped surface of the flank surface 6 over an angle ω about the line ab, with respect to the cutter body 10. A trace of rotation of the contour of the cutting edge 5 does not become cylindrical but becomes convex drum shape. Namely, conversion of attitude becomes a condition of S' by pivoting the tilted flat surface S over the angle ω about the X axis to for the curve placing the intermediate point n of the contour line at a position n'. Namely, the contour line becomes a curve projecting in the radius direction. However, for example, calculating with assumption that the length j of the line ab = 20 mm, d = 10 mm, η 20°, ω = 6°, the projecting amount t of the intermediate point n' of the contour line after attitude conversion is merely 8.4 μm and is extremely smaller in comparison with the cutting radius about 10 mm. Therefore, no particular problem will be caused in cutting process by the cutter, such as the end mill.

As set forth above, when the convex arc-shaped surface of the flank surface 6 of the tip is formed by grinding, the radius k of the grinding cylinder Σ is not necessarily the same as the radius R of the cutting circumferential periphery L upon cutting process of the cutting object by means of the throw-away type cutter installed the tip set forth above. For example, it is possible that the R is 20 mm whereas k is 22 mm, 23 mm or 21 mm. Thus, by setting k > R, the projection amount t of the center portion of the contour of the cutting edge 5 becomes small. Accordingly, the radius k of the grinding cylinder Σ is preferred to be equivalent to the radius R of the cutting circumferential periphery L upon cutting process by the cutter or greater.

It is quite advantageous to form the flank surface 6 at least on the side of the cutting edge 5 into convex arc-shaped surface and the convex arc-shaped surface of the flank surface 6 can be formed by cylindrical grinding to satisfactorily compensate the drawback that pivoting trace of the contour line of the cutting edge 5 becomes slightly convex drum shape. Namely, in the foregoing cylindrical grinding, the convex arc-shaped surface can be formed only by mounting the raw material 1a of the tip on the rotary shaft to be the holding body in the predetermined attitude and contacting the cutting tool, such as bite or so forth from the side portion with rotating the rotary shaft. Therefore, no complicate control operation is required in the grinding process to permit quite easily and stably produce the tip at high dimensional precision without causing any fluctuation. When special curve surface processing, facility investment and production cost can be reduced significantly to permit supply of the tip at low cost.

In contrast to this, by replacing the grinding cylinder Σ upon production of the tip with the cutting process cylinder in Fig. 23, for example, and by setting so that the contour line of the cutting edge of the virtual tip upon installation on the cutter becomes elliptic arc on the ellipse Q, the cutting edge strictly contacts on the inner periphery of the cutting cylinder over the entire length of the contour line of the cutting edge. Therefore, the cutting trace of the contour line becomes complete cylindrical shape and thus is ideal for the cutter. However, the flank surface of the virtual tip becomes impossible to cut for no flank angle in the peripheral surface shape of the cutting cylinder to be impossible to form into the arc-shaped surface. For providing uniform proper flank angle over the entire length of the contour of the elliptic arc, special free curved surface has to be set. Accordingly, in this virtual tip, upon production from the raw material of the tip, it is not possible to form the flank surface by cylindrical grinding. Since it becomes necessary to grind the set free curved surface with relatively controlling motion of both of the raw material of the tip and the grinding tool to cause significant difficult in operation to lower production ability and to easily cause fluctuation in dimensional precision. Also, operation mechanism and control mechanism required for grinding the flank surface becomes quite complicate to make the production cost and facility cost high.

It should be noted that, in the throw-away tip 1 having the flat surface form second flank surface 6b as in the second embodiment set forth above, the second flank surface 6b can be formed by press molding upon production of the raw material 1a of the tip. Therefore, upon grinding of the first flank surface 6a of the convex arc-shape by cylindrical grinding of the raw material 1a of the tip after sintering, it is advantageous to permit grinding process with taking the flat surface form second flank surface 6b as reference for positioning in the tip width direction. Furthermore, in the construction where the convex arc-shaped third flank surface 6c is provided as in the second embodiment of the tip, the third flank surface 6c chamfers the edge portion of the bottom of the tip 1. Therefore, it becomes unnecessary to provide a cut-out portion in the corner portion 15 between the side surface 12 and the bottom surface 13 of the tip seat 11 of the cutter body 10 to avoid interference with the edge portion of the tip. Thus, production of the cutter body is facilitated.

The throw-away tip according to the present invention includes various different shaped of the edge portion on the side of the shorter edge of the cutting surface. Also, the throw-away type cutter may be a construction, in which two or four tips 1 may be installed instead of three tips as in the cutter body 10.

In the throw-away tip as set forth above, the convex arc-shaped surface in the flank surface is constructed with a peripheral surface of a cylinder having an axis intersecting with the flat tilted surface including the titled surface in the cutting surface at an acute angle, the contour line of the cutting edge becomes elliptic arc as the intersection line between the peripheral surface of the cylinder and the tilted flat surface. Therefore, the convex arc-shaped surface of the flank surface can be easily formed by cylindrical grinding.

In the construction set forth above, in the throw-away tip, the contour line forming elliptic arc expressed by particular expression. Particularly for facilitating production, uniform flank angle can be set over the entire length of the cutting edge upon installation onto the cutter body. Also, upon production of the tip, since the selection range of the contour line of the cutting edge can be wide to adapt to difference of use condition of the cutter.

In the construction set forth above, in the throw-away tip, the radius of the cylinder forming the convex arc-shaped surface in the flank surface can be set to be equal to or greater than a radius of cutting when the throw-away tip is installed on the cutter body. In this case, since the curvature of the elliptic arc of the contour of the cutting edge is set small, a difference of degree of projection in the radial direction of the cutter of the base portion side and the cutting edge portion side versus the center portion of the cutting edge becomes small. In conjunction therewith, an overhang of the overall tip from the cutter body becomes small to increase ability of adapting to high load cutting with high strength of the cutting edge in the cutter.

As set forth above, a throw-away tip having a simple shape and being easily produced can be provided.

In the construction of the throw-away tip set forth above, the tip can be firmly fixed in the stable condition on the cutter body, and in conjunction therewith, high dimensional precision and high stability of quality can be achieved in manufacturing of the tip.

The throw-away tip may avoid necessity for forming the cut-out for avoiding interference of the edge portion of the tip to the corner portion between the side surface and the bottom surface of the tip seat in the cutter body. Thus, production of the tip can be facilitated.

Also, as the throw-away tip, installation strength of the tip onto the cutter body can be large to avoid excessive overhang of the cutting edge in the mounting condition. Thus, strength of the edge portion can be large.

Also, with the construction set forth above, the throw-away tip can be mounted in stable condition and the overhang of the cutting edge can be minimized.

On the other hand, in the production method of the throw-away tip, the convex arc-shaped surface of the flank surface can be easily and precisely formed by cylindrical grinding of both side surfaces of the raw material of the tip formed by press of a super hard material and sintering thereof.

Also, in the production method of the throw-away tip as set forth above, cylindrical grinding is performed by fixing the raw material of the tip on a rotary shaft, contacting the grinding tool from the side with rotating the rotary shaft to form each side surface to be the flank surface of the raw material of the tip In this case, the raw material of the tip is mounted on the rotary shaft substantially similar condition as mounting on the cutter body. Then, the convex arc-shaped flank surface can be easily formed by simply contacting the grinding tool onto the side surface from the side portion with rotating the rotary shaft.

Also, a throw-away type cutter constructed by fixing the throw-away tip set forth above can set both of the axial rake angle and the radial rake angle at large positive angles. Also, the flank angle can be small to certainly maintain the wedge angle of the cutting edge sufficiently large. Also, by arrangement attitude of the tip, the flank angle to achieve small vibration during cutting for small cutting resistance, smooth cut. Also, the strength of the cutting edge can achieve high adaptability for high load cutting to exhibit high durability to achieve superior performance in total.

Furthermore, the throw-away type cutter may achieve high holding strength and high stability of seating of the throw-away tip to withstand for cutting process under high load.

The present invention should not be understood as limited to the specific embodiments set out above but to include all possible embodiments which fall within the scope encompassed with respect to the features set out in the appended claims.

**Claims**

1. A throw-away tip having a cutting surface (2) of parallelogramic shape in plan view with side edges thereof forming cutting edges (5,5) and a screw insertion hole (4) extending from said cutting surface (2) to a bottom surface (3) on the opposite side of said cutting surface,
   said cutting edges (5) being tilted along their length so that a height from said bottom surface (3) of said tip (1) is greater at the side of a cutting edge corner portion (5a) than the height of the side of a base portion (5b) for forming a tilted surface (2a) descending from said cutting edge corner portion (5a) to a center portion (2b),
   **characterized in that**:
   flank surfaces (6,6) on side surfaces along said cutting edges (5,5) are of a convex arc-shaped cross-section bulging outwardly from a line extended from a point on the cutting edge to a point in the plane found perpendicular to the bottom surface (3), at least at the cutting edge portion (5a) side of said cutting edge (5), and the flank surfaces being continuously and gradually more inclined from said perpendicular line toward an inside of said tip along the length of the cutting edges (5,5) from the side of said cutting edge corner portion (5a) to the side of said base portion (5b).

2. A throw-away tip as set forth in claim 1, wherein contour lines of said cutting edges (5,5) form curved lines moderately bulging in an extension direction of said flank surfaces (6,6) from a straight line (ab) connecting said base portion side (5b) and said cutting edge corner portion side (5a).

3. A throw-away tip as set forth in claim 1 or 2, wherein said convex arc-shaped cross-section of said flank surfaces (6,6) is consisted of a peripheral surface of a cylinder ($\Sigma$) having an axis ($\sigma$) intersecting with a tilted flat surface (S) including said tilted surface (2a) in said cutting surface (2) at an acute angle (q) less than or equal to 45°, and said contours of said cutting edges (5,5) form an elliptic arc as an intersection line between said peripheral surface of said cylinder ($\Sigma$) and said tilted flat surface (S).

4. A throw-away tip as set forth in claim 3, wherein each of said contour lines forming elliptic arcs of the cutting edges (5,5) are expressed by taking a mid point of the line ab connecting both ends (5a,5b) thereof as a point m, the direction of the line ab as X-axis, a direction connecting the point m and the mid point n of the contour line as Y-axis, a length of the line ab is j a radius of the cylinder $\Sigma$ forming the convex arc-shaped surface of the flank surface (6) as k, a leg f the perpendicular line extended from the point m to the axis $\sigma$ of the cylinder $\Sigma$ as m', an angle formed by the perpendicular line mm' and the tilted flat surface S including the contour as $\phi$, and an intersection angle between the tilted flat surface S and the axis $\sigma$ of the cylinder $\Sigma$ as $\eta$, by the following expression:

$$[Y\cos \phi+\{k^2-(j^2\sin^2 \eta/4)^{1/2}\}]^2+(X\sin \eta-Y\sin \phi\cos \eta)^2=k^2$$

5. A throw-away tip as set forth in claim 3 or 4, wherein a radius k of said cylinder $\Sigma$ forming said convex arc-shaped surface in said flank surface (6) is greater than or equal to a radius R of cutting of a cutter when said throw-away tip (1) is installed.

6. A throw-away tip as set forth in any one of claims 1 to 5, wherein each flank surface (6) is constituted of said convex arc-shaped surface from the cutting edge (5) side to the bottom (3) side over its entire length.

7. A throw-away tip as set forth in any one of claims 1 to 5, wherein said flank surfaces (6,6) are constituted of first flank surfaces (6a,6a) of said convex arc-shaped surface and located on the side of said cutting edge (5), and second flank surfaces (6b,6b) located toward said bottom (3), adjacent to said first flank surfaces (6a,6a) and stepped inwardly in relation to said first flank surfaces (6a,6a) by way of a step (7).

8. A throw-away tip as set forth in claim 7, wherein each flank surface (6) is further constituted of a third flank surface (6c) more inclined toward said base portion than said second flank surface (6b), located adjacent to the bottom (3) and

said first flank surface (6a) and said third flank surface (6c) form a common convex arc-shaped surface.

9. A throw-away tip as set forth in claim 7 or 8, wherein said steps (7) between each said first and second flank surfaces (6a,6b) has an indentation depth in a range of 0.1 to 0.8 mm.

10. A throw-away tip as set forth in any one of claims 7 to 9, wherein said second flank surface (6b) is a flat surface angled with respect to the bottom surface (3) of said tip within an angular range of 90 to 101°.

11. A production method for a throw-away tip as defined in any one of claims 1 to 10, comprising the steps of:

preparing a raw material (1a) of said tip by press forming and sintering a super hard material, in which both side surfaces (60,60) take unfinished flat surfaces to serve as flank surfaces (6,6) in a region to be formed into said convex arc-shaped surface;
forming each flank surface (6,6) with said convex arc-shaped surface by cylindrical grinding each side surface (60,60) about an axis which intersects with a plane (S) including said tilted surface (2a) on the cutting surface (2) at an acute angle less than or equal to 45°.

12. A production method as set forth in claim 11, wherein said raw material (1a) of said tip is fixed on a rotary shaft, and each of said side surfaces (60,60) is finished into said flank surfaces (6) by cylindrical grinding by bringing a grinding tool into contact with said raw material of the tip from the side while rotating said rotary shaft.

13. A throw-away type cutter on which a throw-away tip as defined in any one of claims 1 to 10 is fixed by means of a mounting screw,
said throw-away tip (1) being fixed on a tip seat (11) provided in a cutter body (10) with an axial rake angle (α) as a cutting angle in an axial direction and a radial rake angle (β) as a cutting angle in a radial direction, both of said axial rake angle and said radial rake angle being positive angle, and said flank surface (6) on the side of cutting being shifted, for keeping a flank angle (θ), about both ends of the contour line of said cutting edge (5) on the cutting side, to an inside of a cutting circumferential periphery (L) of which center is set on an axis (O) of the cutter body (10), away from a position on the cutting circumferential periphery (L).

14. A throw-away type cutter as set forth in claim 13, wherein use is made of the throw-away tip (1) as defined in any one of claims 1 to 10, and the tip seat (11) of said cutter body (10) has a side surface (12) including an upper side surface (12a) opposite to said first flank surface (6a) of the throw-away tip (1) with an interval and a flat lower side surface (12b) tightly abutting said second flank surface (6b) of the throw-away tip.

**Patentansprüche**

1. Wegwerf-Spitze mit einer Schneidfläche (2) mit einer Parallelogrammgestalt in der Draufsicht, wobei Seitenkanten dieser Schneidfläche (2) Schneidkanten (5) bilden und sich eine Schraubeneinsetzöffnung (4) von der Schneidfläche (2) hin zu einer Bodenfläche (3) auf der der Schneidfläche gegenüberliegenden Seite erstreckt, wobei die Schneidkanten (5) entlang ihrer Länge geneigt sind, so dass eine Höhe von der Bodenfläche (3) der Spitze (1) aus auf der Seite eines Eckbereichs (5a) der Schneidkante größer ist als die Höhe auf der Seite eines Basisbereichs (5b), so dass eine geneigte Oberfläche (2a) ausgebildet ist, die von dem Eckbereich (5a) der Schneidkante hin zu einem mittleren Bereich (2b) abfällt,
**dadurch gekennzeichnet, dass**
Flankenflächen (6) an Seitenflächen entlang der Schneidkanten (5) einen konvexen bogenförmigen Querschnitt haben, der sich von einer Linie aus, die sich von einem Punkt auf der Schneidkante hin zu einem Punkt in der Ebene erstreckt, die rechtwinklig zu der Bodenfläche (3) gefunden werden kann, nach außen wölbt, und zwar zumindest auf derjenigen Seite der Schneidkante (5), auf der sich der Schneidkantenbereich (5a) befindet, und wobei die Flankenflächen von dieser rechtwinkligen Linie aus in Richtung eines Inneren der Spitze entlang der Länge der Schneidkanten (5) von der Seite des Eckbereichs (5a) der Schneidkante zur Seite des Basisbereichs (5b) hin kontinuierlich und nach und nach stärker geneigt sind.

2. Wegwerf-Spitze nach Anspruch 1, bei welcher Konturlinien der Schneidkanten (5) gekrümmte Linien bilden, die gemäßigt in einer Erstreckungsrichtung der Flankenflächen (6) von einer geraden Linie (ab) aus gewölbt sind, die die Seite des Basisbereichs (5b) sowie die Seite des Eckbereichs (5a) der Schneidkante verbindet.

3. Wegwerf-Spitze nach Anspruch 1 oder 2, bei welcher der konvexe bogenförmige Querschnitt der Flankenflächen (6) aus einer Umfangsfläche eines Zylinders (Σ) mit einer Achse (σ) besteht, die eine geneigte flache Fläche (S) schneidet, welche die geneigte Oberfläche (2a) in der Schneidfläche (2) einschließt, und zwar in einem spitzen Winkel (q), der geringer kleiner als oder gleich 45° ist, und wobei die Konturen der Schneidkanten (5) einen elliptischen Bogen als Schnittlinie zwischen der Umfangsfläche des Zylinders (Σ) und der geneigten flachen Fläche (S) bilden.

4. Wegwerf-Spitze nach Anspruch 3, bei welcher jede der Konturlinien, die elliptische Bögen der Schneidkanten (5) bilden, dadurch ausgedrückt sind, dass ein Mittelpunkt der Linie (ab), indem ihre beiden Enden (5a, 5b) verbunden werden, als Punkt m genommen wird, die Richtung der Linie ab als X-Achse, eine Richtung, die den Punkt m und den Mittelpunkt n der Konturlinie verbindet, als Y-Achse, eine Länge der Linie ab als j, einen Radius des Zylinders Σ, der die konvexe bogenförmige Fläche der Flankenfläche (6) bildet, als k, einen Schenkel der rechtwinkligen Linie, verlängert von dem Punkt m aus zu der Achse σ des Zylinders Σ hin, als m', einen Winkel zwischen der rechtwinligen Linie mm' und der geneigten flachen Fläche S einschließlich der Kontur als ϕ, und einen Schnittwinkel zwischen der geneigten flachen Oberfläche S und der Achse σ des Zylinders Σ als η, und zwar durch den folgenden Ausdruck:

$$[Y\cos\phi + \{k^2 - (j^2\sin^2\eta/4)^{1/2}\}]^2 + (X\sin\eta - Y\sin\phi\cos\eta)^2 = k^2.$$

5. Wegwerf-Spitze nach Anspruch 3 oder 4, bei welcher ein Radius k des Zylinders Σ, der die konvexe bogenförmige Fläche in dieser Flankenfläche (6) bildet, größer oder gleich einem Radius R des Schnitts einer Schneidvorrichtung ist, wenn die Wegwerf-Spitze (1) montiert ist.

6. Wegwerf-Spitze nach einem der Ansprüche 1 bis 5, bei welcher jede Flankenfläche (6) aus der konvexen bogenförmigen Fläche von der Seite der Schneidkante (5) aus hin zur Seite des Bodens (3) über ihre gesamte Länge gebildet ist.

7. Wegwerf-Spitze nach einem der Ansprüche 1 bis 5, bei welcher die Flankenflächen (6) aus ersten Flankenflächen (6a) der konvexen bogenförmigen Oberfläche gebildet sind, positioniert auf der Seite der Schneidkante (5), und aus zweiten Flankenflächen (6b), die in Richtung des Bodens (3) positioniert sind, angrenzend an die ersten Flankenflächen (6a) und einwärts gestuft in Bezug auf die ersten Flankenflächen (6a) mittels einer Stufe (7).

8. Wegwerf-Spitze nach Anspruch 7, bei welcher jede Flankenfläche (6) außerdem gebildet ist aus einer dritten Flankenfläche (6c), die stärker in Richtung des Basisbereichs geneigt ist als die zweite Flankenfläche (6b), positioniert angrenzend an den Boden (3), wobei die erste Flankenfläche (6a) und die dritte Flankenfläche (6c) eine gemeinsame konvexe bogenförmige Oberfläche bilden.

9. Wegwerf-Spitze nach Anspruch 7 oder 8, bei welcher die Stufen (7) zwischen den ersten und zweiten Flankenflächen (6a, 6b) eine Kerbtiefe in einem Bereich von 0,1 bis 0,8 mm haben.

10. Wergwerfspitze nach einem der Ansprüche 7 bis 9, bei welcher die zweite Flankenfläche (6b) eine flache Fläche ist, die winklig bezüglich der Bodenfläche (3) der Spitze innerhalb eines Winkelbereichs von 90 bis 101° angeordnet ist.

11. Verfahren zur Herstellung einer Wegwerf-Spitze gemäß einem der Ansprüche 1 bis 10, mit den folgenden Schritten:

    Vorbereiten eines Rohmaterials (1a) der Spitze durch Pressformen und Sintern eines superharten Materials, wobei beide Seitenflächen (60) noch nicht abschließend bearbeitete flache Oberflächen haben, die als Flankenflächen (6) dienen sollen, in einem Bereich, der zu der besagten konvexen bogenförmigen Fläche geformt werden soll, und

    Ausbilden jeder Flankenfläche (6) mit der besagten konvexen bogenförmigen Fläche durch zylindrisches Schleifen jeder Seitenfläche (60) um eine Achse herum, die eine Ebene (S) schneidet, welche die geneigte Fläche (2a) an der Schneidfläche (2) in einem spitzen Winkel von höchstens 45° schneidet.

12. Verfahren nach Anspruch 11, bei welchem das Rohmaterial (1a) der Spitze an einer drehbaren Welle befestigt wird und jede der besagten Seitenflächen (60) zu den besagten Flankenflächen (6) durch zylindrisches Schleifen abschließend bearbeitet wird, indem ein Schleifwerkzeug in Kontakt mit dem Rohmaterial der Spitze von der Seite aus gebracht wird, während die sich Welle gedreht wird.

13. Wegwerf-Schneidvorrichtung, an welcher eine Wegwerf-Spitze gemäß einem der Ansprüche 1 bis 10 mittels einer Anbringschraube befestigt ist, wobei die Wegwerf-Spitze (1) an einem Spitzensitz (11) befestigt ist, der an einem Körper (10) der Schneidvorrichtung vorgesehen ist, und zwar mit einem axialen Spanwinkel (α) als Schneidwinkel in einer axialen Richtung und einem radialen Spanwinkel (β) als Schneidwinkel in einer radialen Richtung, wobei sowohl der axiale als auch der radiale Spanwinkel positive Winkel sind und die Flankenfläche (6) auf der Seite des Schnitts, um einen Flankenwinkel (θ) zu behalten, um beide Enden der Konturlinie der Schneidkante (5) auf der Schnittseite herum hin zu einem Inneren eines Schnittaußenumfangs (L) versetzt ist, dessen Mittelpunkt sich auf einer Achse (O) des Körpers (10) der Schneidvorrichtung befindet, weg von einer Position auf dem Außenumfang (L).

14. Wegwerf-Schneidvorrichtung nach Anspruch 13, bei welcher die Wegwerf-Spitze (1) nach einem der Ansprüche 1 bis 10 verwendet wird und der Spitzensitz (11) des Körpers (10) der Schneidvorrichtung eine Seitenfläche (12) hat, die eine obere Seitenfläche (12a) gegenüber der ersten Flankenfläche (6a) der Wegwerf-Spitze (1) mit einem Abstand einschließt und eine flache untere Seitenfläche (12b), die fest gegen die zweite Flankenfläche (6b) der Wegwerf-Spitze anliegt.

**Revendications**

1. Plaquette amovible comportant une surface de coupe (2) à forme de parallélogramme en vue en plan, des arêtes latérales de celle-ci formant des arêtes de coupe (5, 5) et un trou d'insertion de vis (4) s'étendant depuis la surface de coupe (2) jusqu'à une surface inférieure (3) sur le côté opposé de ladite surface de coupe,

lesdites arêtes de coupe (5) étant inclinées sur leur longueur de sorte qu'une hauteur depuis ladite surface inférieure (3) de ladite plaquette (1) est plus grande au niveau du côté d'une partie de coin d'arête de coupe (5a) que la hauteur du côté d'une partie de base (5b) afin de former une surface inclinée (2a) descendant depuis ladite partie de coin d'arête de coupe (5a) vers une partie centrale (2b),

**caractérisée en ce que** :

les surfaces de dépouille (6, 6) sur les surfaces latérales le long desdits arêtes de coupe (5, 5) sont de section transversale en forme d'arc convexe faisant saillie vers l'extérieur depuis une ligne s'étendant depuis un point sur l'arête de coupe vers un point dans le plan qui se trouve perpendiculaire à la surface inférieure (3), au moins au niveau du côté de la partie d'arête de coupe (5a) de ladite arête de coupe (5), et les surfaces de dépouille étant continuellement et progressivement plus inclinées depuis ladite ligne perpendiculaire vers l'intérieur de ladite plaquette sur la longueur des arêtes de coupe (5, 5) depuis le côté de ladite partie de coin d'arête de coupe (5a) vers le côté de ladite partie de base (5b).

2. Plaquette amovible selon la revendication 1, dans laquelle les lignes de profil desdites arêtes de coupe (5, 5) forment des lignes incurvées faisant modérément saillie dans une direction d'extension desdites surfaces de dépouille (6, 6) depuis une ligne droite (ab) reliant ledit côté de partie de base (5b) et ledit côté de partie de coin d'arête de coupe (5a).

3. Plaquette amovible selon la revendication 1 ou 2, dans laquelle ladite section transversale en forme d'arc convexe desdites surfaces de dépouille (6, 6) consiste en une surface périphérique, d'un cylindre (Σ) ayant un axe (σ) recoupant une surface plate inclinée (S) comprenant ladite surface inclinée (2a) dans ladite surface de coupe (2) à un angle aigu (q) inférieur ou égal à 45° et lesdits profils desdites arêtes de coupe (5, 5) forment un arc elliptique en tant que ligne d'intersection entre ladite surface périphérique dudit cylindre (Σ) et ladite surface plate inclinée (S).

4. Plaquette amovible selon la revendication 3, dans laquelle chacune des lignes de profil formant des arcs elliptiques des arêtes de coupe (5, 5) est représentée en prenant un point milieu de la ligne ab reliant les deux extrémités (5a, 5b) de celles-ci en tant que point m, la direction de la ligne ab comme axe des X, une direction reliant le point m et le point milieu n de la ligne de profil comme axe des Y, une longueur de la ligne ab est j, le rayon du cylindre Σ formant la surface en forme d'arc convexe de la surface de dépouille (6) comme k, un segment f de la ligne perpendiculaire s'étendant depuis le point m à l'axe σ du cylindre Σ comme m', l'angle formé par la ligne perpendiculaire mm' et la surface plate inclinée S comprenant le contour comme Φ, et un angle d'intersection entre la surface plate inclinée S et l'axe σ du cylindre Σ comme η, par l'expression suivante :

$$[Y\cos\phi + \{k^2 - (j^2\sin^2\eta/4)^{1/2}\}]^2 + (X\sin\eta - Y\sin\phi\cos\eta)^2 = k^2$$

**5.** Plaquette amovible selon la revendication 3 ou 4, dans laquelle un rayon k dudit cylindre $\Sigma$ formant ladite surface en forme d'arc convexe dans ladite surface de dépouille (6) est supérieur ou égal à un rayon R de coupe d'une fraise lorsque ladite plaquette amovible (1) est installée.

**6.** Plaquette amovible selon l'une quelconque des revendications 1 à 5, dans laquelle chaque surface de dépouille (6) est constituée de ladite surface en forme d'arc convexe depuis le côté de l'arête de coupe (5) jusqu'au côté inférieur (3) sur toute sa longueur.

**7.** Plaquette amovible selon l'une quelconque des revendications 1 à 5, dans laquelle lesdites surfaces de dépouille (6, 6) sont constituées de premières surfaces de dépouille (6a, 6a) de ladite surface en forme d'arc convexe et situées du côté de ladite arête de coupe (5) et de secondes surfaces de dépouille (6b, 6b) situées vers ledit fond (3), de façon adjacente auxdites premières surfaces de dépouille (6a, 6a) et en gradins vers l'intérieur en relation avec lesdites premières surfaces de dépouille (6a, 6a) au moyen d'un gradin (7).

**8.** Plaquette amovible selon la revendication 7, dans laquelle chaque surface de dépouille (6) est en outre constituée d'une troisième surface de dépouille (6c) plus inclinée vers ladite partie de base que ladite seconde surface de dépouille (6b), située de manière adjacente au fond (3) et
ladite première surface de dépouille (6a) et ladite troisième surface de dépouille (6c) forment une surface commune en forme d'arc convexe.

**9.** Plaquette amovible selon la revendication 7 ou 8, dans laquelle lesdits gradins (7) entre chacune desdites première et seconde surfaces de dépouille (6a, 6b) présentent une profondeur d'entaille dans une plage de 0,1 à 0,8 mm.

**10.** Plaquette amovible selon l'une quelconque des revendications 7 à 9, dans laquelle ladite seconde surface de dépouille (6b) est une surface plate présentant un angle par rapport à la surface inférieure (3) de ladite plaquette dans une plage angulaire de 90 à 101°.

**11.** Procédé de production d'une plaquette amovible selon l'une quelconque des revendications 1 à 10, comprenant les étapes consistant à :

préparer le matériau brut (1a) de ladite plaquette par formage sous pression et frittage d'un matériau super dur, dans lequel les deux surfaces latérales (60, 60) prennent des surfaces plates non finies pour servir de surfaces de dépouille (6, 6) dans une région devant être formée en une surface en forme d'arc convexe, former chaque surface de dépouille (6, 6) avec ladite surface en forme d'arc convexe par meulage cylindrique de chaque surface latérale (60, 60) autour d'un axe qui recoupe un plan (S) comprenant ladite surface inclinée (2a) sur la surface de coupe (2) avec un angle aigu inférieur ou égal à 45°.

**12.** Procédé de production selon la revendication 11, dans lequel ledit matériau brut (1a) de ladite plaquette est fixé sur un arbre rotatif, et chacune desdites surfaces latérales (60, 60) est finie en lesdites surfaces de dépouille (6) par meulage cylindrique en amenant un outil de meulage en contact avec ledit matériau brut de la plaquette par le côté tout en faisant tourner ledit arbre rotatif.

**13.** Outil de coupe du type amovible sur lequel une plaquette amovible selon l'une quelconque des revendications 1 à 10 est fixée au moyen d'une vis de montage,
ladite plaquette amovible (1) étant fixée sur un siège de plaquette (11) prévu sur un corps d'outil de coupe (10) avec un angle de dégagement axial ($\alpha$) en tant qu'angle de coupe dans une direction axiale et un angle de dégagement radial ($\beta$) en tant qu'angle de coupe dans une direction radiale, à la fois ledit angle de dégagement axial et ledit angle de dégagement radial étant des angles positifs et ladite surface de dépouille (6) du côté de la coupe étant décalée pour conserver un angle de dépouille ($\theta$) aux environs des deux extrémités de la ligne de profil de ladite arête de coupe (5) du côté de la coupe, à l'intérieur d'une périphérie circonférentielle de coupe (L) dont le centre est établi sur un axe (O) du corps de l'outil de coupe (10) à l'écart d'une position de la périphérie circonférentielle de coupe (L).

**14.** Outil de coupe du type amovible selon la revendication 13, dans lequel on utilise la plaquette amovible (1) telle que définie dans l'une quelconque des revendications 1 à 10, et où le siège de plaquette (11) dudit corps d'outil de coupe (10) présente une surface latérale (12) comprenant une surface latérale supérieure (12a) opposée à ladite première surface de dépouille (6a) de la plaquette amovible (1) avec un intervalle et une surface latérale inférieure plate (12b) butant fermement sur ladite surface de dépouille (6b) de la plaquette amovible.

FIG.IA

FIG.IB

FIG.IC

# FIG.2

# FIG.3A

# FIG.3B

# FIG.3C

## FIG.4A

## FIG.4B

## FIG.5

## FIG.6

## FIG.7A

## FIG.7B

## FIG.7C

# FIG.8

# FIG.9A

# FIG.9B

# FIG.9C

# FIG.10A

# FIG.10B

EP 0 925 863 B1

FIG.11

FIG.12

EP 0 925 863 B1

FIG.13A

FIG.13B

FIG.13C

EP 0 925 863 B1

## FIG.14

## FIG.15

## FIG.16A

## FIG.16B

FIG.17

FIG.18

FIG.19

FIG.20

FIG.21

# FIG.22

## FIG.23A

## FIG.23B

# FIG.24A

# FIG.24B

# FIG.25

# FIG.26

# FIG.27

# FIG.28 PRIOR ART